# EUROPEAN PATENT APPLICATION

(11) **EP 4 722 874 A1**
(43) Date of publication of application: **08.04.2026**
(21) Application number: 24853730.0
(22) Date of filing: 12.08.2024
(51) Int. Cl.: G06F 3/04812

(54) **INTERACTION METHOD AND ELECTRONIC DEVICE**

(30) Priority: 14.08.2023 CN 202311022535
(71) Applicant: Huawei Technologies Co., Ltd., Shenzhen, Guangdong 518129 (CN)
(72) Inventor: XU, Jie, Shenzhen, Guangdong 518129 (CN); HU, Liang, Shenzhen, Guangdong 518129 (CN)
(74) Representative: Huawei European IPR
(86) International application number: PCT/CN2024/111405
(87) International publication number: WO 2025/036321

(57) **Abstract**

This application discloses an interaction method and an electronic device. After detecting a specific operation (for example, an operation of pressing and holding a physical button on a mouse) performed by a user on a device (for example, the mouse) having a cursor attribute and that establishes a connection to the electronic device, the electronic device may select an interaction object, starts an intelligent interaction function, and display an intelligent interaction entry at or near a location of a cursor. After detecting that the user inputs an instruction, the electronic device may display the instruction on the intelligent interaction entry. After input of the instruction is completed, the electronic device may substitute the interaction object into the input instruction for understanding and execution. In this way, a task can be completed without moving the cursor over a long distance. In addition, the specific operation may further trigger the electronic device to recognize content of the interaction object, and provide an intelligent menu option based on the content, to complete a shortcut operation on the interaction object. This is convenient, quick, and efficient, and improves user experience.

## Description

This application claims priority to Chinese Patent Application No. 202311022535.4, filed with the China National Intellectual Property Administration on August 14, 2023 and entitled "INTERACTION METHOD AND ELECTRONIC DEVICE", which is incorporated herein by reference in its entirety.

### TECHNICAL FIELD

This application relates to the field of terminal technologies, and in particular, to an interaction method and an electronic device.

### BACKGROUND

With development of electronic devices, more electronic devices (for example, personal computers) can provide a natural language interaction function, for example, a voice interaction function. The voice interaction function may support the electronic devices in receiving voice instructions input by users, and understanding and executing the voice instructions.

However, currently, a natural language interaction entry on the personal computer (personal computer, PC) is usually displayed at a fixed location on a screen. If the user wants to perform an operation on an interaction object by using the natural language interaction function, the user needs to first select the interaction object, move a cursor to the natural language interaction entry to perform the corresponding operation, and then move the cursor back to an original location after the operation is completed. In this way, frequent cursor movement cannot provide intelligent experience for the user, and task execution efficiency is also low. If some tasks have a plurality of operation steps, the cursor needs to perform a large amount of meaningless movement on the screen, and a movement distance is also long, which is complex and cumbersome, resulting in poor user experience.

### SUMMARY

Embodiments of this application provide an interaction method and an electronic device. The electronic device may display an intelligent interaction entry at or near a location of a cursor, and support a user in performing an operation on an interaction object by using the intelligent interaction entry, to resolve a problem of long-distance cursor movement, and improve human-computer interaction efficiency and user experience.

According to a first aspect, an embodiment of this application provides an interaction method, applied to an electronic device. The electronic device includes a screen. The method includes: The electronic device detects a first operation; in response to the first operation, the electronic device starts an intelligent interaction function and displays an intelligent interaction entry, where the intelligent interaction function is used for interaction between the electronic device and a user by using a voice instruction or a text instruction, the intelligent interaction entry is displayed at a first location or near the first location, and the first location is a location of a cursor on the screen when the first operation is detected; the electronic device detects that the user inputs a first instruction by using the intelligent interaction entry, and determines, based on the first instruction, that an interaction object is a first interaction object; and the electronic device performs an operation corresponding to the first instruction on the first interaction object.

The first instruction may be a voice instruction or a text instruction input by the user, and the first interaction object may be an object used for intelligent interaction, for example, an object like a picture, a video, a text, a file, an application, an application icon, or a widget.

By implementing the method provided in the first aspect, the electronic device may support the user in starting the intelligent interaction function by using the first operation, and displaying the intelligent interaction entry at or near the location of the cursor, and may support the user in performing an operation on the interaction object by using the intelligent interaction entry. In this way, the user can complete a task without moving the cursor over a long distance to the fixed intelligent interaction entry. This is convenient and quick, and improves human-computer interaction efficiency and user experience.

In some implementations, the intelligent interaction entry may be a natural language interaction entry, for example, an artificial intelligence interaction entry or a voice recognition interaction entry. For example, the intelligent interaction entry may be ChatGPT, Apple's Siri, Huawei's Celia, or the like. This is not limited in this application.

In a possible implementation, the electronic device is connected to an accessory device, and the accessory device is configured to receive the first operation and an operation of moving the cursor by the user.

The accessory device may be, for example, a device having a cursor attribute, like a mouse or a touchpad. The first operation may be an operation performed by the user on the accessory device to trigger the electronic device to start the intelligent interaction function and display the intelligent interaction entry at or near the location of the cursor.

In this way, the user can trigger, by performing a one-step operation on the accessory device, the electronic device to start the intelligent interaction function and display the intelligent interaction entry at or near the location of the cursor, and does not need to move the cursor over a long distance to the fixed intelligent interaction entry. This is convenient and quick, and improves human-computer interaction efficiency.

In a possible implementation, the accessory device is the mouse, the mouse includes a left button and a right button, and the first operation is an operation of pressing and holding the left button, or an operation of pressing and holding the right button, or an operation of pressing and holding both the left button and the right button.

In this way, the electronic device can be triggered to start the intelligent interaction function and display the intelligent interaction entry at or near the location of the cursor without adding an extra physical button to the mouse. This reduces development costs.

It may be understood that the first operation may not be limited to the foregoing three types of press and hold operation, and may be another operation performed by the user on the left button and/or the right button.

In some embodiments, a physical button may also be added to the mouse, and a corresponding operation (for example, a click operation) performed by the user on the physical button may also trigger the electronic device to start the intelligent interaction function and display the intelligent interaction entry at or near the location of the cursor.

In a possible implementation, that the electronic device determines, based on the first instruction, that the interaction object is the first interaction object specifically includes: When the first instruction does not include a first keyword, the electronic device determines that the first interaction object is an object that is recognizable at the first location, where the first keyword is a keyword indicating the interaction object; or when the first instruction includes the first keyword, the electronic device determines, as the first interaction object, the interaction object indicated by the first keyword.

The first keyword may be a word (for example, "this", "it", or "that") specifying the interaction object, or may be a word indicating a name of the interaction object.

In other words, after input of the first instruction is completed, the electronic device may determine whether the first instruction includes a default object (to be specific, the first instruction does not include the word indicating the name of the interaction object) or a reference pronoun (to be specific, the first instruction includes the word like "this", "that", or "it" specifying the interaction object). If yes, the electronic device may determine the interaction object based on the first location. If no, the electronic device may determine, as the first interaction object, the interaction object indicated by the first keyword, and may perform the corresponding operation based on the first instruction.

In a possible implementation, the intelligent interaction entry is formed by deforming the cursor.

In this way, the electronic device may display the intelligent interaction entry at a location of the cursor before deformation, instead of displaying the intelligent interaction entry at a fixed location on the screen. The intelligent interaction entry is at the location of the cursor, to resolve a problem of long-distance cursor movement. In addition, a process of deforming the cursor into the intelligent interaction entry can provide more dynamic and vivid visual experience for the user.

In a possible implementation, after that the electronic device starts the intelligent interaction function, the method further includes: The electronic device outputs a first prompt, where the first prompt prompts the user to input a recognizable instruction corresponding to the first interaction object.

In this way, when the user does not know how to perform intelligent interaction, the electronic device may output a corresponding prompt (for example, a voice prompt or a text prompt), so that the user can quickly learn how to perform intelligent interaction. This can improve interaction efficiency and user experience.

In a possible implementation, after that the electronic device detects that the user inputs the first instruction, the method further includes: If the electronic device detects that the user cancels the first operation, the electronic device does not detect an instruction input by the user.

In this way, after the user cancels the first operation, the electronic device may determine that the user completes the input of the instruction, and then may perform a next operation.

In a possible implementation, the first instruction does not include a keyword that directly indicates the name of the interaction object.

Because an object that currently needs to be interacted with has been determined by using the first operation or by using the first operation and another recognition operation, when the user inputs the instruction, the user does not need to overthink how to clearly describe a location or a name of the object to facilitate accurate recognition of the electronic device. The user only needs to use some words that indirectly specify the object orally, for example, "this" or "that", or does not even need to indicate the object, and directly describe a to-be-operated instruction. In this way, the user does not need to spend too much time describing an object that is difficult to describe, thereby improving convenience of natural language instruction interaction by the user, and helping improve a degree of use of the natural language instruction by the user.

In a possible implementation, the cursor is a pointer cursor, the first interaction object is a picture or first content in the picture, the first content is a part of content in the picture, and that the electronic device performs the operation corresponding to the first instruction on the first interaction object specifically includes: When the first instruction indicates an intention of performing a second operation on the first interaction object, the electronic device performs the second operation on the first interaction object, where the second operation includes any one of the following operations: sharing, collecting, copying, erasing, replacing, inserting, beautifying, recognizing, style migration, parameter adjustment, and saving.

The first picture may be a picture in an application on the electronic device, and the first content may be a part of content (for example, a cutout subject) in the first picture.

In this way, the electronic device can conveniently and quickly implement various operations on the picture by using the intelligent interaction function.

In a possible implementation, when the second operation is the saving operation, that the electronic device performs the second operation on the first interaction object specifically includes: The electronic device saves the first interaction object to a target location, where the target location is a default storage location, or the target location is determined based on a keyword that is included in the first instruction and that indicates a storage location.

In this way, when the user wants to save the first interaction object to a storage location, the user does not need to perform a multi-level menu jump operation, and the electronic device can save the first interaction object to the corresponding storage location by inputting only one instruction. This simplifies user operations, and improves human-computer interaction efficiency and user experience.

In a possible implementation, the cursor is a pointer cursor, the first interaction object is a video, and that the electronic device performs the operation corresponding to the first instruction on the first interaction object specifically includes: When the first instruction indicates an intention of performing a third operation on the video, the electronic device performs the third operation on the video, where the third operation includes any one of the following operations: sharing, collecting, playing, trimming, and saving.

In this way, the electronic device can conveniently and quickly implement various operations on the video by using the intelligent interaction function.

In a possible implementation, the cursor is a pointer cursor, the first interaction object is a first text, and that the electronic device performs the operation corresponding to the first instruction on the first interaction object specifically includes: When the first instruction indicates an intention of summarizing the first text, the electronic device summarizes the first text to generate a second text, and displays a first window, where the first window includes the second text; or when the first instruction indicates an intention of translating the first text, the electronic device translates the first text to generate a third text, and displays a second window, where the second window includes the third text; or when the first instruction indicates an intention of querying the first text, the electronic device queries the first text, and displays a query result, where the query result includes related information of the first text.

The first window may be, for example, a window 220 shown in FIG. 2D. In this case, the first text may be, for example, a selected text shown in FIG. 2B. The second window may be, for example, a window 520 shown in FIG. 5I. In this case, the first text may be, for example, a selected text shown in FIG. 5G. The query result may be, for example, a search result 615 shown in FIG. 6E. In this case, the first text may be, for example, "Huizhou".

In this way, the electronic device can conveniently and quickly implement various operations on the text by using the intelligent interaction function.

In a possible implementation, the method further includes: The electronic device detects a fourth operation; and in response to the fourth operation, the electronic device replaces the first text with the second text, and displays the second text; or the electronic device detects a fifth operation; and in response to the fifth operation, the electronic device replaces the first text with the third text, and displays the third text.

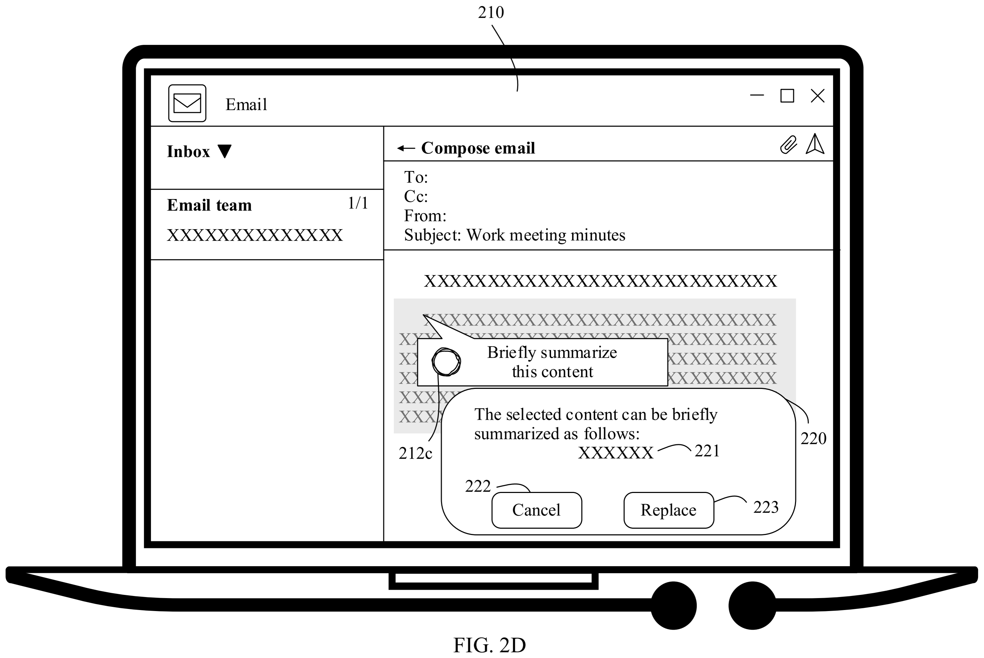

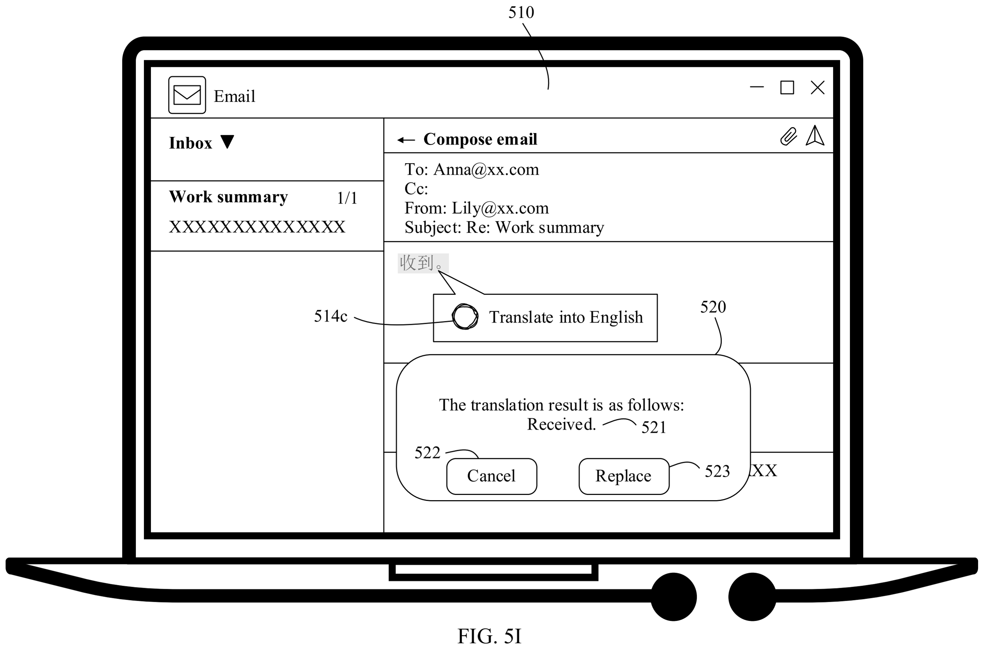

The fourth operation may be, for example, an operation (for example, a click operation) performed by the user on an option 223 shown in FIG. 2D, and the fifth operation may be, for example, an operation (for example, a click operation) performed by the user on an option 523 shown in FIG. 5I.

In this way, the electronic device can support the user in conveniently and quickly replacing the text.

In a possible implementation, the cursor is a pointer cursor, and that the electronic device performs the operation corresponding to the first instruction on the first interaction object specifically includes: When the first instruction indicates an intention of searching for a first object, the electronic device searches for the first object, and displays a search result, where the search result includes information about one or more first objects, and a type of the first object includes any one of the following: a picture, a video, and a document.

In this way, the electronic device can conveniently and quickly implement an object search operation by using the intelligent interaction function, and the user does not need to manually perform complex and cumbersome search operations.

In a possible implementation, before that the electronic device searches for the first object, the method further includes: The electronic device displays a first user interface, where the first user interface is a user interface corresponding to a first document; that the electronic device displays the search result specifically includes: The electronic device displays the search result in the first user interface; and after that the electronic device displays the search result, the method further includes: The electronic device detects a sixth operation; and the electronic device inserts the first object into the first document in response to the sixth operation.

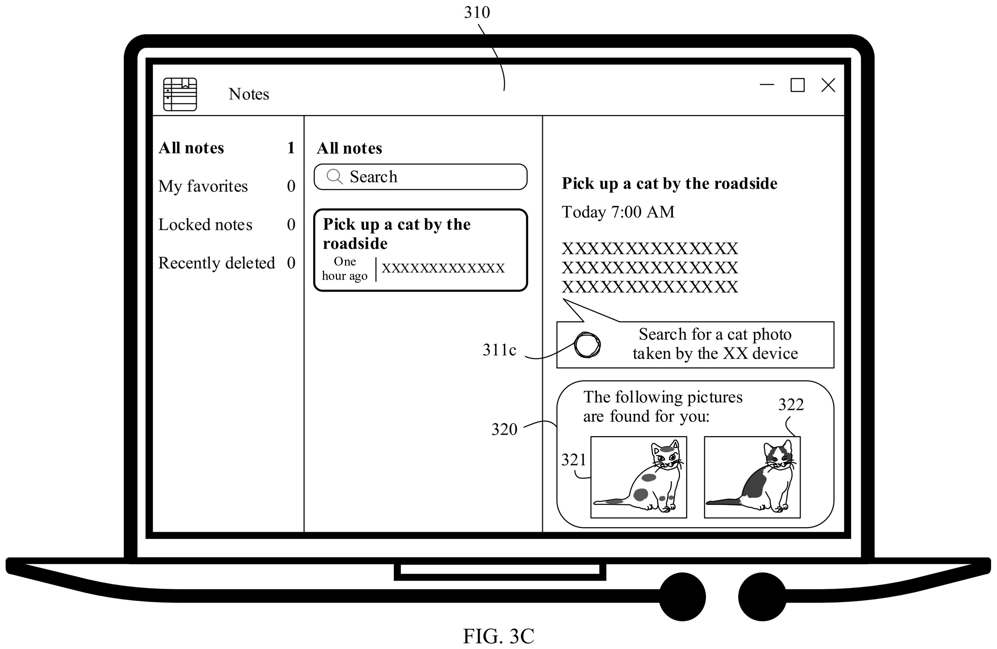

The first user interface may be, for example, a user interface 310, the first document may be, for example, a document edited by the user, the sixth operation may be an operation performed by the user on the first object displayed in the search result (for example, an operation performed by the user on a picture 321 shown in FIG. 3C), and the first object may be, for example, the picture 321.

In this way, the electronic device may directly display the search result in the document, and the user may directly select an object from the search result and insert the object into the document. This is convenient and quick, and simplifies user operations.

In a possible implementation, the first object is a second document, and before that the electronic device searches for the first object, the method further includes: The electronic device displays a desktop; that the electronic device displays the search result specifically includes: The electronic device displays the search result on the desktop; and after that the electronic device displays the search result, the method further includes: The electronic device detects a seventh operation; and the electronic device opens the second document in response to the seventh operation.

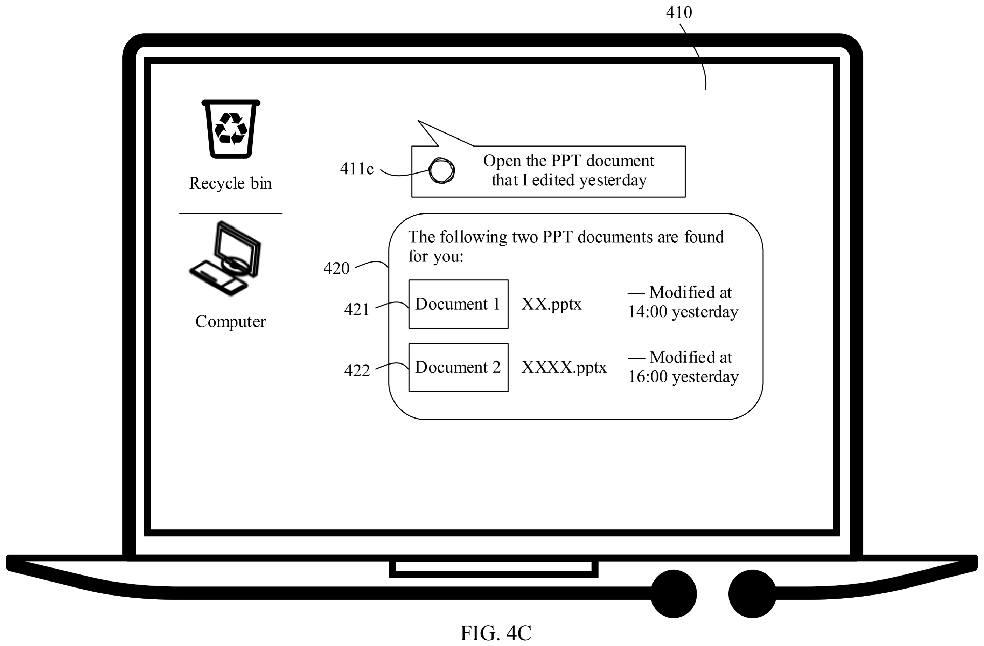

The second document may be one or more documents edited by the user, for example, two PPT documents shown in FIG. 4C. The seventh operation may be an operation performed by the user on a document entry displayed in the search result (for example, an operation performed by the user on a document entry 421 shown in FIG. 4C).

In a possible implementation, the cursor is a text cursor, the method further includes: The electronic device detects first input of the user; and in response to the first input, the electronic device inputs and displays a fourth text, where the fourth text is generated based on the first input.

In this embodiment of this application, when the cursor is the pointer cursor, the electronic device may determine that the user intends to input an operation instruction; or when the cursor is the text cursor, the electronic device may determine that the user intends to input a text.

The first input may be input performed by the user by using a voice, and the fourth text may be a text generated by the user through the first input.

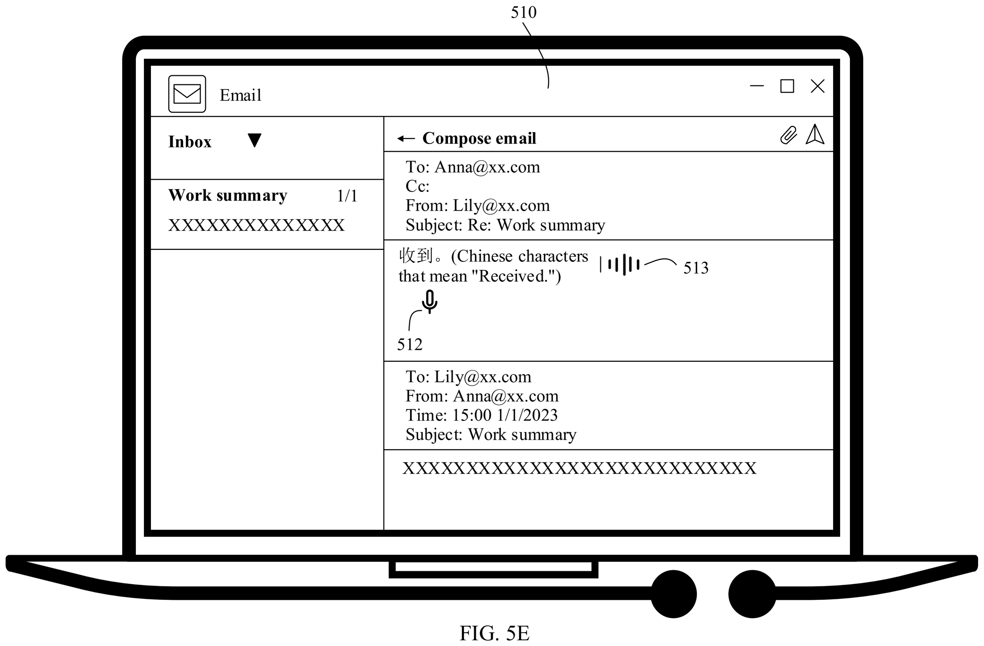

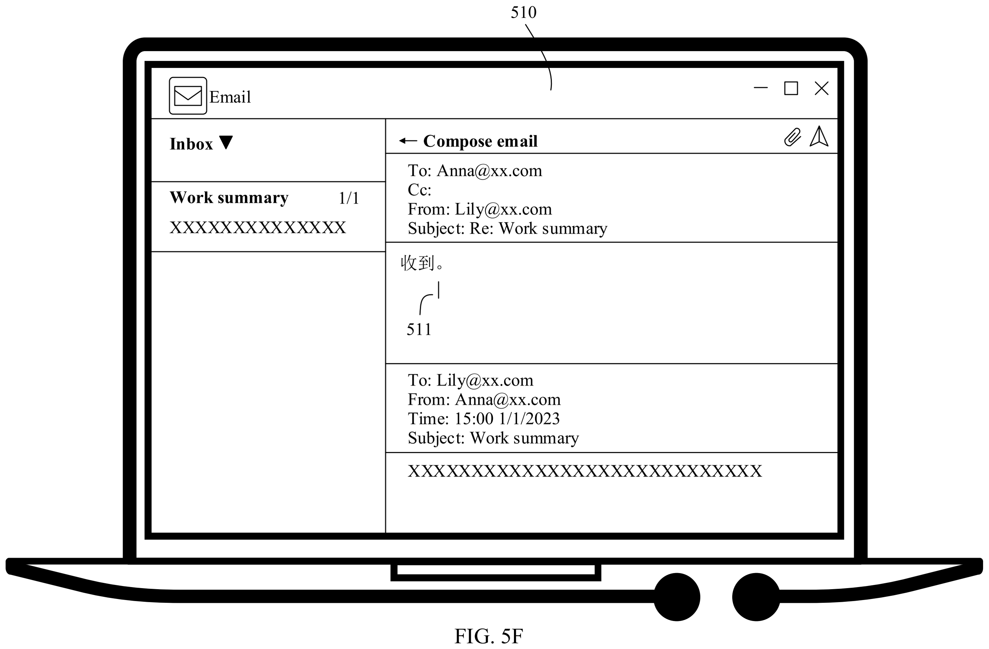

In this way, by using the intelligent interaction function, the electronic device may directly record a text input by the user by using a voice (for example, directly inserting the text into an email that the user is editing, as shown in FIG. 5E and FIG. 5F). This is convenient and quick, and improves text input efficiency.

In a possible implementation, the intelligent interaction entry is used to display a first menu option, the first menu option is generated based on the first interaction object, and the method further includes: The electronic device detects an eighth operation performed by the user on the first menu option; and the electronic device performs an operation corresponding to the first menu option on the first interaction object in response to the eighth operation.

The first menu option may be an intelligent menu option associated with content of the first interaction object, and the eighth operation may be, for example, a click operation.

In this embodiment of this application, the intelligent interaction entry may not only display an operation instruction input by the user, but also display the intelligent menu option.

In this way, the electronic device may recognize content of the interaction object by using the intelligent interaction function, and dynamically generate and display the intelligent menu option based on the content, to further complete a shortcut operation on the interaction object. This is convenient and efficient, and resolves a problem that a menu function provided by a current application is fixed and undiversified.

In a possible implementation, the first interaction object includes information related to a date, the first menu option is used to add the information related to the date to a schedule reminder application, and that the electronic device performs the operation corresponding to the first menu option on the first interaction object specifically includes: The electronic device adds the information related to the date to the schedule reminder application.

The schedule reminder application may be, for example, a calendar application or the like, and the first menu option may be, for example, a menu option "add to calendar".

In this way, the user does not need to manually open the schedule reminder application to add schedule arrangement information such as the date included in the first interaction object, and can complete the adding by clicking only once the first menu option (for example, the menu option "add to calendar"). This is convenient, quick, and efficient, simplifies user operations, and improves user experience.

In a possible implementation, the first interaction object includes a two-dimensional code, the first menu option is used to recognize the two-dimensional code, and that the electronic device performs the operation corresponding to the first menu option on the first interaction object specifically includes: The electronic device recognizes the two-dimensional code.

In this way, the user does not need to manually search for a function option for recognizing the two-dimensional code on the electronic device, and can complete the recognizing by clicking only once the first menu option (for example, a menu option "recognize the two-dimensional code"). This is convenient, quick, and efficient, simplifies user operations, and improves user experience.

In a possible implementation, that the electronic device performs the corresponding operation on the first interaction object is implemented by the electronic device by invoking a function provided by an application in which the first interaction object is located.

In this embodiment of this application, the electronic device may invoke a function of an original menu option in an application in which the interaction object is located, and can complete a task by inputting only one instruction without multi-level menu jump. This simplifies user operations, and improves human-computer interaction efficiency and user experience.

According to a second aspect, an embodiment of this application provides an electronic device. The electronic device includes one or more processors and one or more memories, where the one or more memories are coupled to the one or more processors, the one or more memories are configured to store computer program code, the computer program code includes computer instructions, and when the one or more processors execute the computer instructions, the electronic device is caused to perform the method according to any one of the possible implementations of the first aspect.

According to a third aspect, an embodiment of this application provides a computer storage medium. The computer storage medium stores a computer program, the computer program includes program instructions, and when the program instructions are run on an electronic device, the electronic device is caused to perform the method according to any one of the possible implementations of the first aspect.

According to a fourth aspect, an embodiment of this application provides a computer program product. When the computer program product runs on a computer, the computer is caused to perform the method according to any one of the possible implementations of the first aspect.

### BRIEF DESCRIPTION OF DRAWINGS

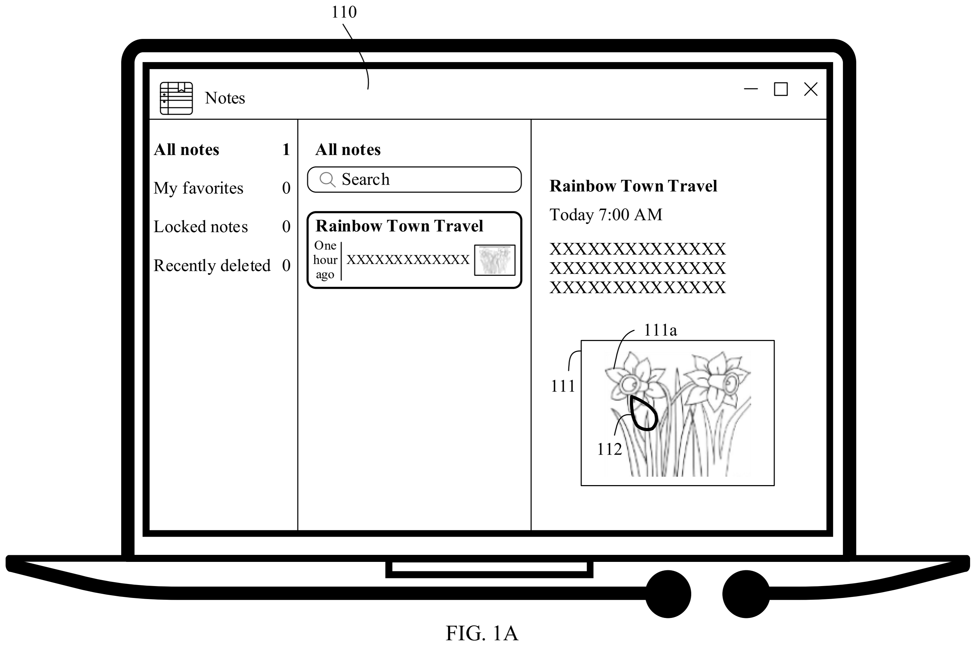

FIG. 1A to FIG. 1E are diagrams of a group of user interfaces for performing a picture content erasing operation according to an embodiment of this application;

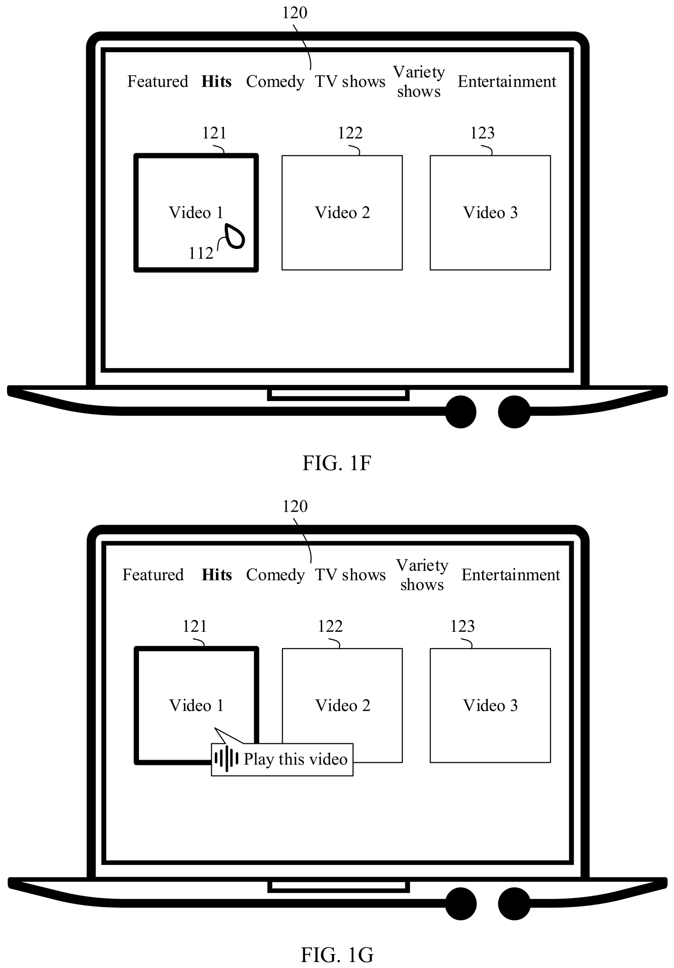

FIG. 1F and FIG. 1G are diagrams of a group of user interfaces for performing a playing operation on a video according to an embodiment of this application;

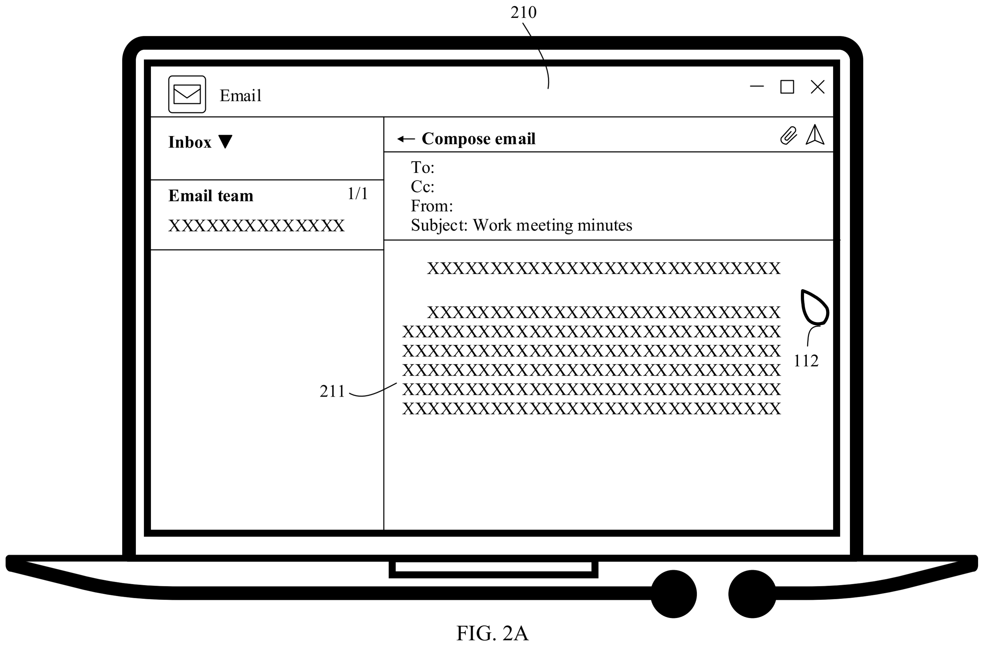

FIG. 2A to FIG. 2E are diagrams of a group of user interfaces for performing a document content summarization operation according to an embodiment of this application;

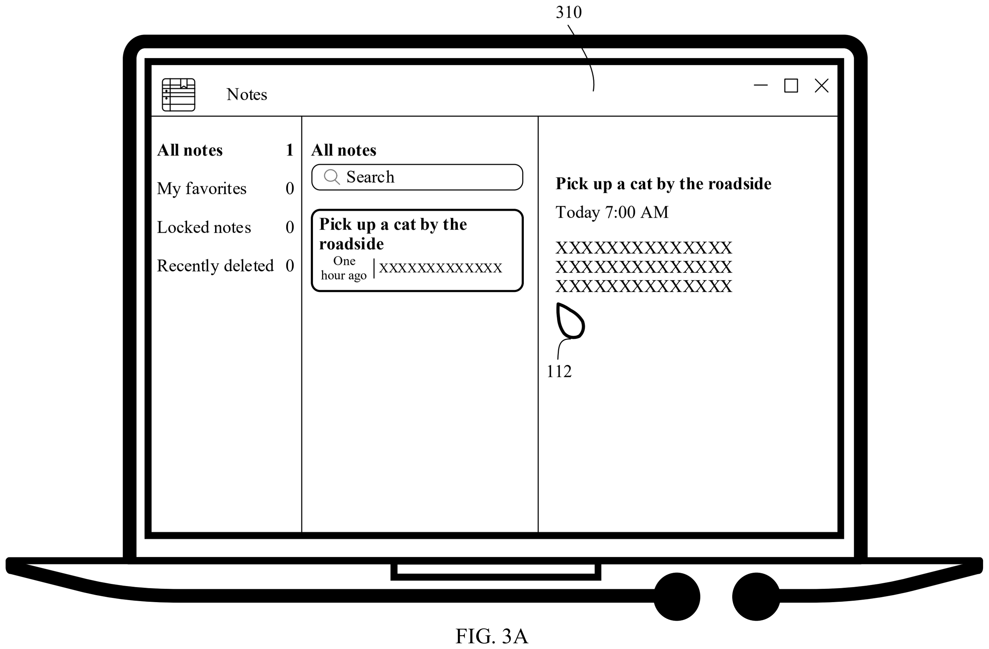

FIG. 3A to FIG. 3D are diagrams of a group of user interfaces for performing a picture insertion operation according to an embodiment of this application;

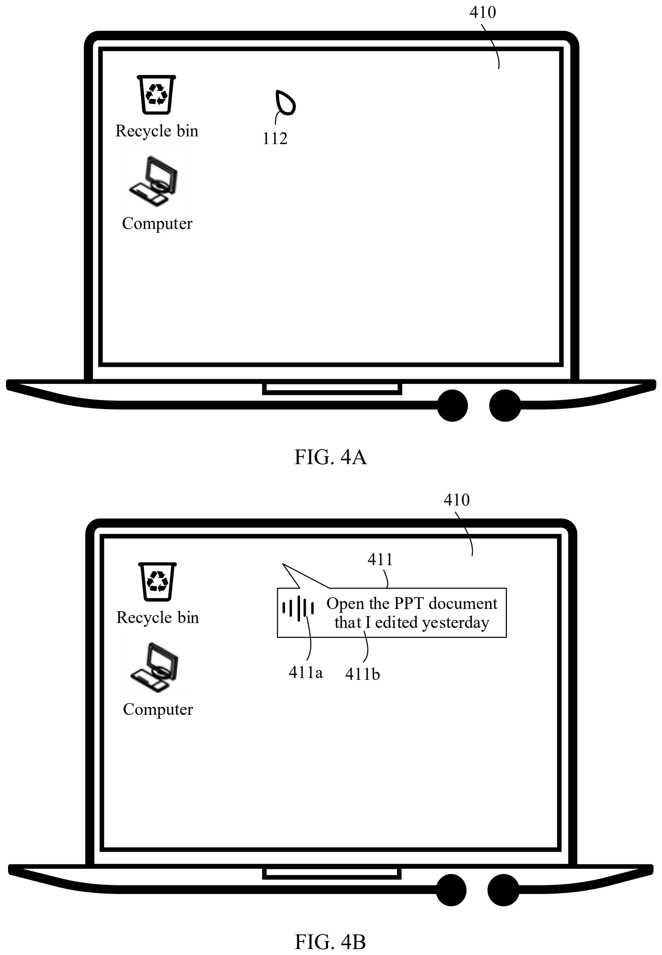

FIG. 4A to FIG. 4D are diagrams of a group of user interfaces for performing a document search operation according to an embodiment of this application;

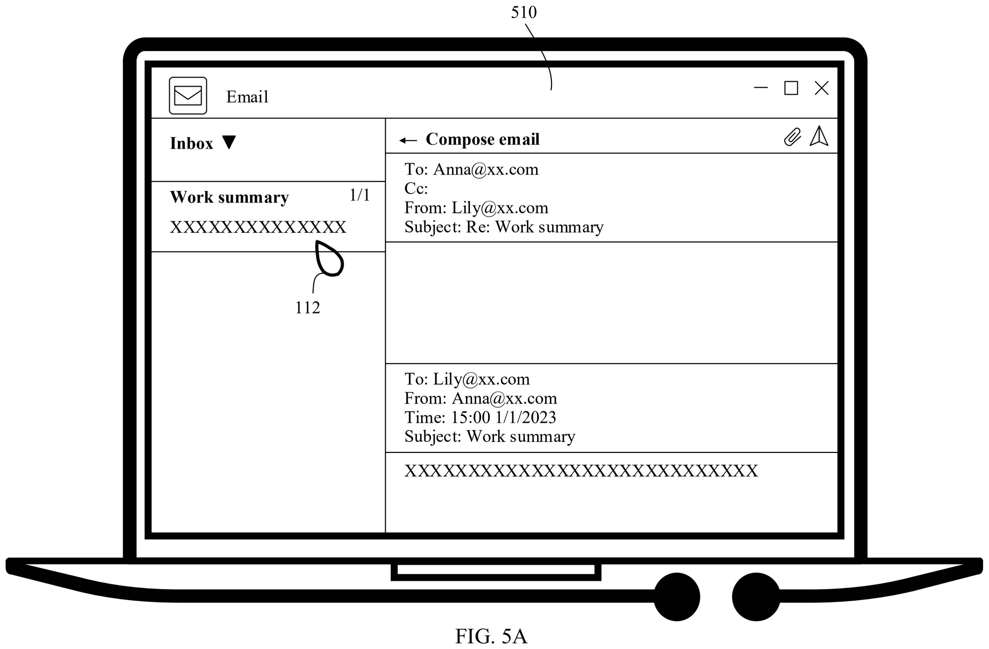

FIG. 5A to FIG. 5F are diagrams of a group of user interfaces for performing a text insertion operation according to an embodiment of this application;

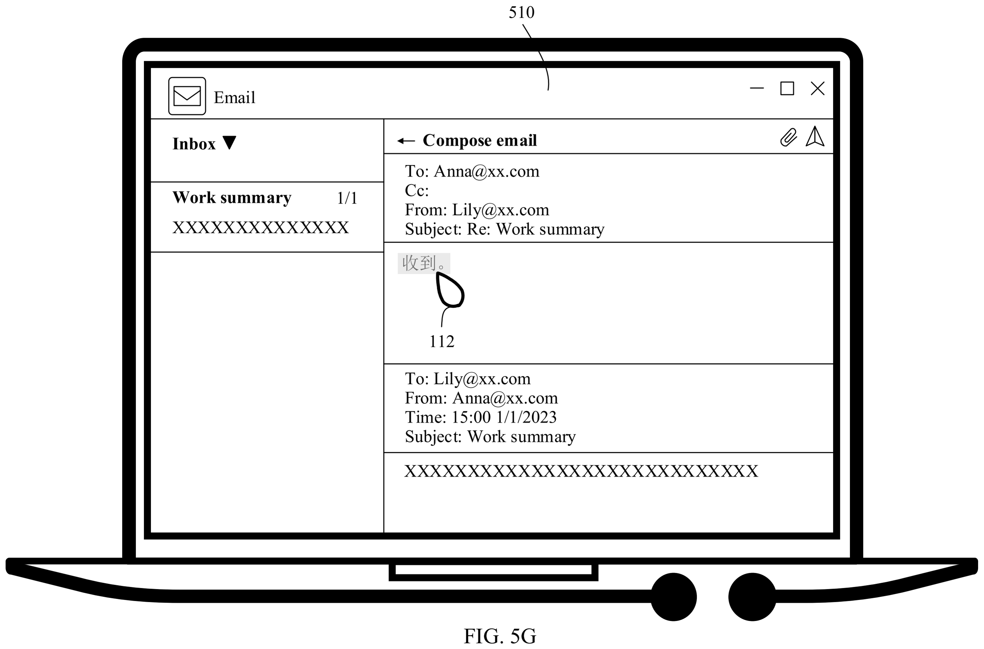

FIG. 5G to FIG. 5J are diagrams of a group of user interfaces for performing a text translation operation according to an embodiment of this application;

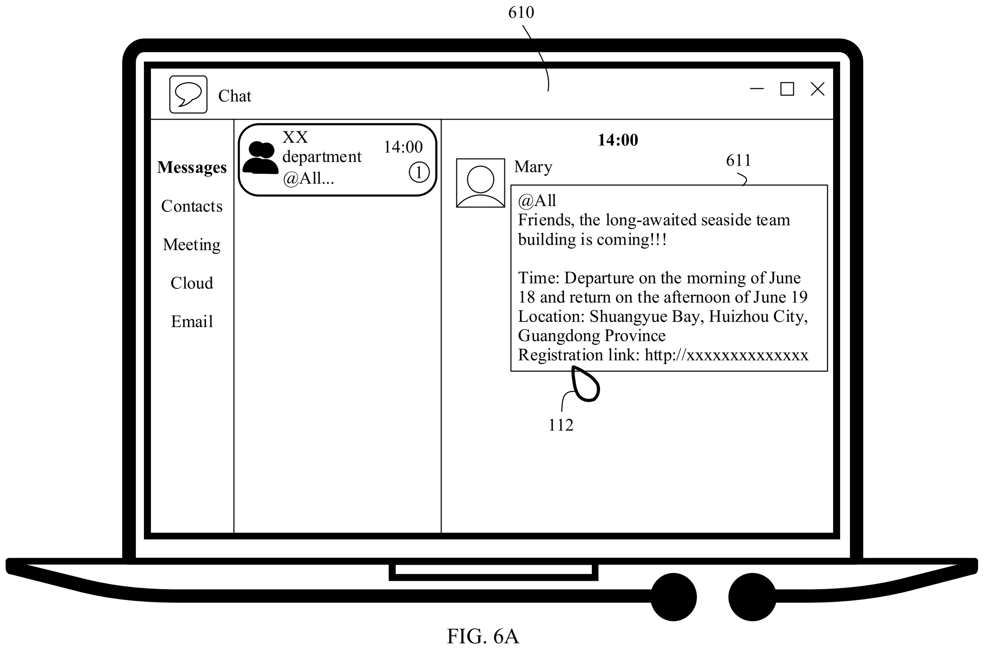

FIG. 6A to FIG. 6C are diagrams of a group of user interfaces for performing a shortcut operation on an interaction object based on an intelligent menu option according to an embodiment of this application;

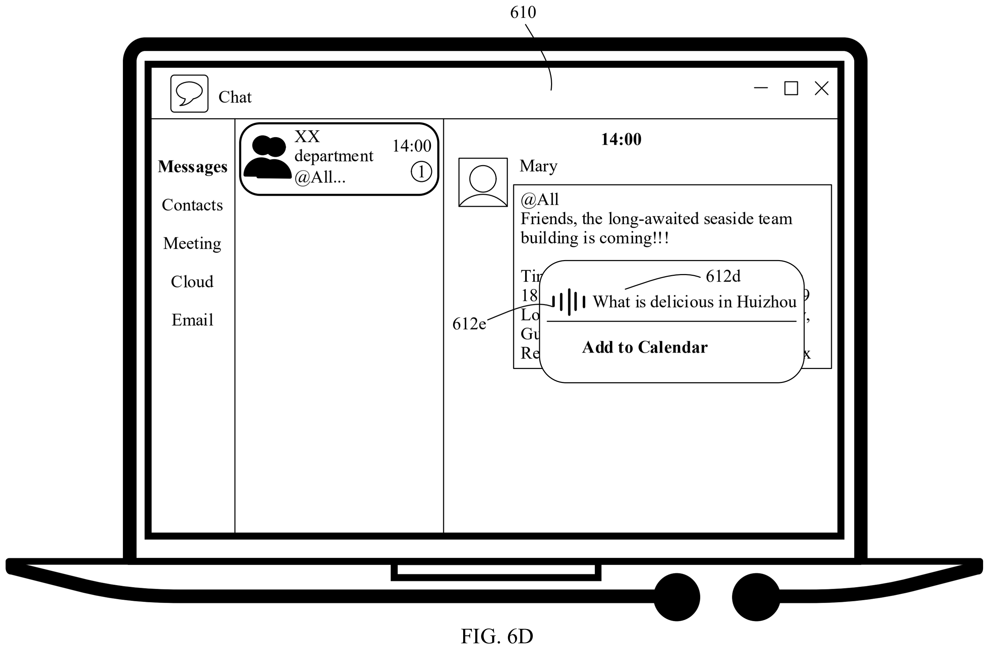

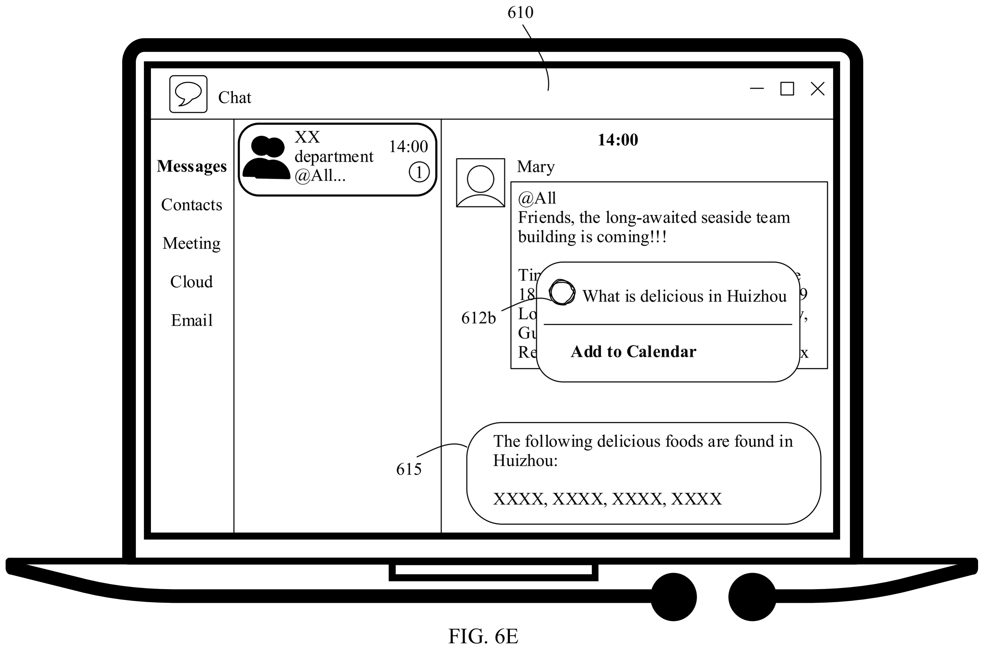

FIG. 6D and FIG. 6E are diagrams of a group of user interfaces for performing a question and answer query operation according to an embodiment of this application;

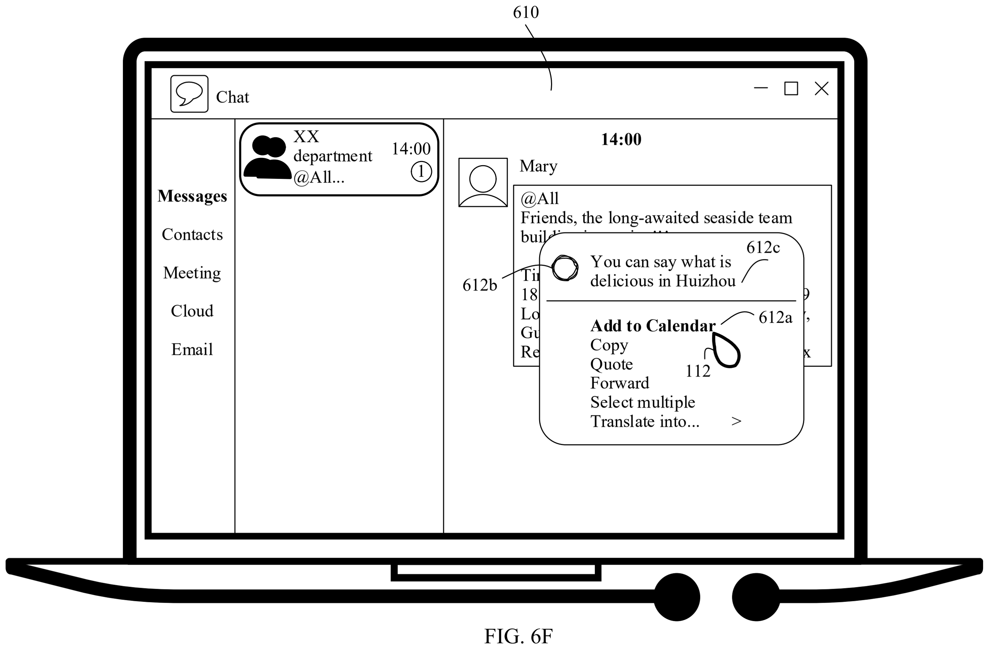

FIG. 6F is a diagram of a user interface of displaying a menu bar according to an embodiment of this application;

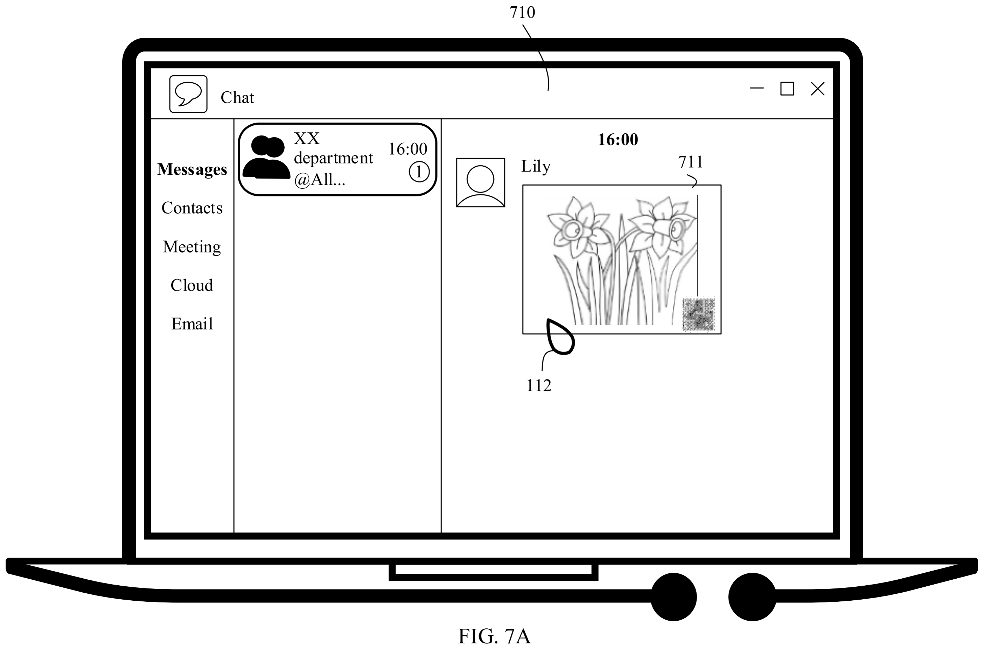

FIG. 7A to FIG. 7D are diagrams of a group of user interfaces for saving a picture to another location according to an embodiment of this application;

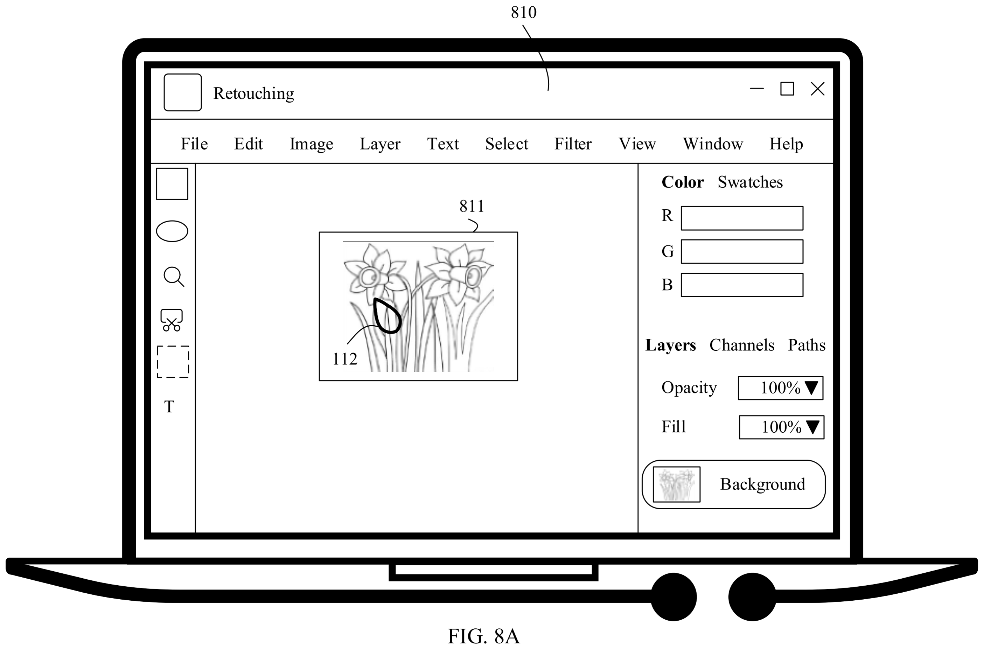

FIG. 8A to FIG. 8D are diagrams of a group of user interfaces for performing a parameter adjustment operation on a picture according to an embodiment of this application;

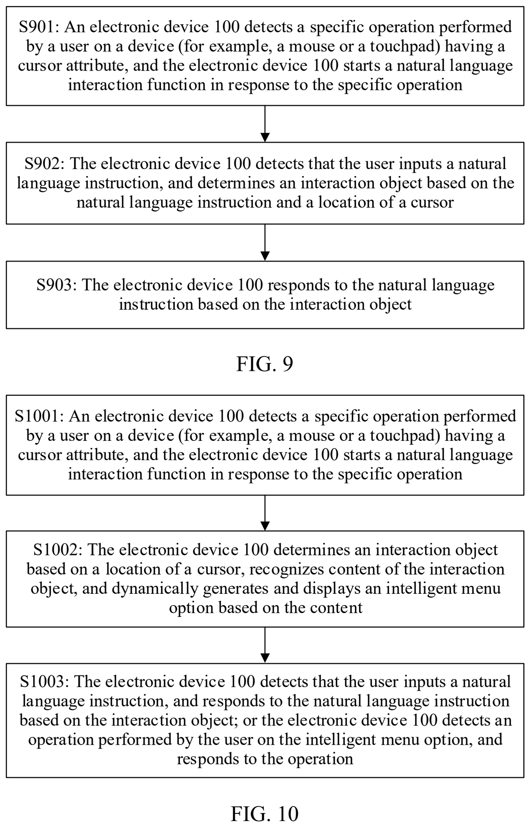

FIG. 9 is a schematic flowchart of an interaction method in an intelligent dialog box application scenario according to an embodiment of this application;
FIG. 10 is a schematic flowchart of an interaction method in an intelligent menu application scenario according to an embodiment of this application;

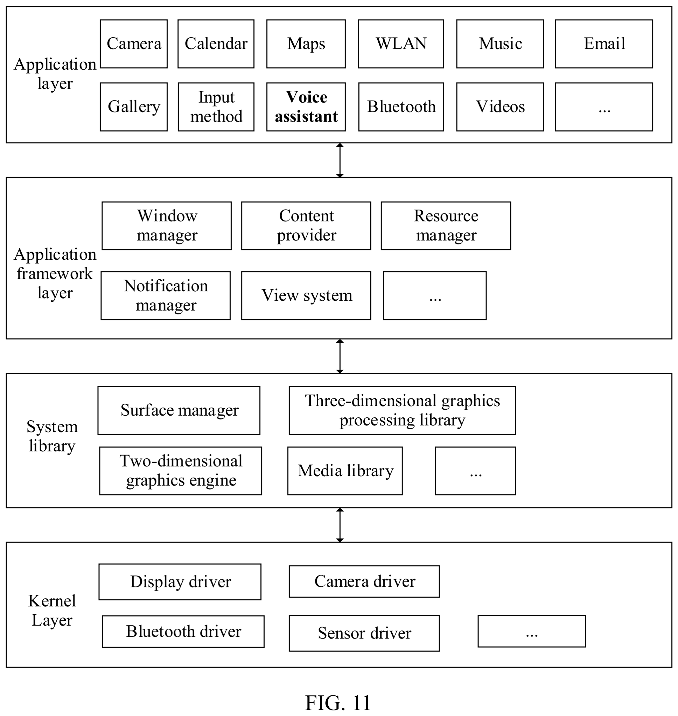

FIG. 11 is a diagram of a software architecture of an electronic device 100 according to an embodiment of this application; and

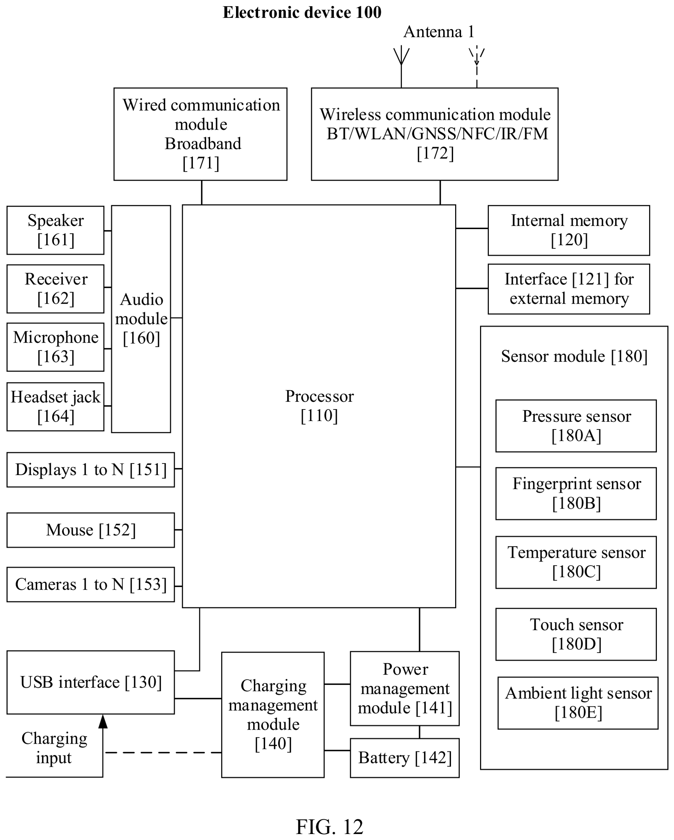

FIG. 12 is a diagram of a structure of an electronic device 100 according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, unless otherwise stated, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in descriptions of embodiments of this application, "a plurality of" means two or more.

It should be understood that the terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

With the development of technologies, a manner of human-machine interaction is also accordingly changing, and it is possible to change machine language interaction into natural language interaction. Machine language interaction is mainly completed by performing a tap/click operation on an interface control or a physical button in a touch manner or by using a keyboard and a mouse. Sometimes, a task can be completed only after hierarchical jumps, and operations are complex. Natural language interaction is mainly completed by combining natural language input (for example, language input or text input) of the user with a powerful natural language processing capability, and can be implemented directly without hierarchical jumps. Therefore, compared with machine language interaction, natural language interaction can provide more convenient and more intelligent experience for the user.

Currently, more electronic devices can provide a natural language interaction function. The natural language interaction function may support the electronic device in receiving language/text instructions input by the user by using natural language (for example, a voice or a text), and may support the electronic device in understanding and executing the instructions.

However, in some scenarios in which an interaction object needs to be processed (for example, a part of content in a picture is to be erased), the user sometimes cannot accurately describe the interaction object by using only a voice/text, and consequently, the electronic device cannot accurately and quickly recognize an intention of the user, and may need multi-round natural language interaction to complete the task, resulting in low interaction efficiency and poor user experience.

In addition, for a personal computer (personal computer, PC), currently, when the user performs a task with a large quantity of operation steps on the PC, a cursor needs to perform a large amount of meaningless movement on a screen, and a movement distance is also long, which is complex and cumbersome, resulting in poor user experience.

For example, currently, a natural language interaction entry on the PC is usually displayed at a fixed location on the screen. If the user wants to perform an operation on an interaction object by using the natural language interaction function, the user needs to first select the interaction object, move the cursor to the natural language interaction entry to perform the corresponding operation, and then move the cursor back to an original location after the operation is completed. In this way, frequent cursor movement cannot provide intelligent experience for the user, and task execution efficiency is also low.

Based on the foregoing problems, embodiments of this application provide an interaction method, which may be applied to an electronic device 100 that can provide a natural language interaction function. For example, the electronic device 100 is a PC. The electronic device 100 may establish a connection to a device (for example, a mouse or a touchpad) having a cursor attribute. After the connection is established, the electronic device 100 may support a user in performing a specific operation (for example, a press and hold operation on a left button and/or a right button on the mouse) on the device (for example, the mouse or the touchpad) having the cursor attribute, to start the natural language interaction function (which may be considered as a type of an intelligent interaction function) of the electronic device 100, and display a natural language interaction entry. The natural language interaction entry may be formed by deforming a cursor and may be displayed, or may be independently displayed near a location of the cursor. Further, the electronic device 100 may detect a voice/text instruction input by the user by using natural language (for example, a voice or a text), and display the instruction on the natural language interaction entry. After input of the instruction is completed, the electronic device 100 may substitute the interaction object into the input instruction for understanding and execution, to complete a task specified by the user. The interaction object may be determined by the electronic device 100 by extracting and recognizing interface content at a location of the cursor or at and near the location of the cursor. In this way, the natural language interaction function may be triggered at or near the location of the cursor, so that an operation corresponding to a natural language instruction may be further performed based on the interaction object, and the task can be completed without moving the cursor over a long distance to the fixed natural language interaction entry. This is convenient and quick, and can resolve a problem that it is inconvenient to express the interaction object by using the natural language.

It should be noted that, for ease of understanding this application, most embodiments of this application are described by using a natural language interaction entry in the conventional technology as an example. The intelligent interaction function or the intelligent interaction entry may further include another type of interaction entry of non-natural language, and another type of intelligent interaction entry brought by technology development. This is not limited in this application.

In addition, by implementing the interaction method provided in embodiments of this application, the electronic device 100 may further intelligently recognize content of the interaction object, and provide an intelligent menu option based on the content, to further complete a shortcut operation on the interaction object. In this way, a current problem that a menu function is fixed and undiversified and can be set only based on a type of the interaction object can be resolved. The electronic device 100 may further invoke, by using the natural language instruction (for example, a voice/text instruction) input by the user, a function of a corresponding menu option in original context or an application. This resolves a problem that the user needs to complete a complex function by navigating through a multi-level menu, enabling direct access with no hierarchical jumps required,, simplifying user operations, improving human-computer interaction efficiency, and enhancing user experience.

It should be noted that a specific type of the electronic device 100 is not limited in embodiments of this application. For example, the electronic device 100 may be a portable electronic device like a notebook computer or a handheld computer that runs HarmonyOS^{®}, Microsoft^{®}, or another operating system. For another example, the electronic device 100 may be a non-portable electronic device like a laptop (Laptop) computer having a touch-sensitive surface or a touch panel, or a desktop computer having a touch-sensitive surface or a touch panel.

In embodiments of this application, for example, the electronic device 100 is a PC. The electronic device 100 may establish a connection to the device (for example, the mouse or the touchpad) having the cursor attribute in a wired or wireless manner.

In embodiments of this application, for example, the electronic device 100 establishes a connection to the mouse. After the connection is established, the user may control the electronic device 100 by using the mouse. For example, the user may trigger, by performing a specific operation on the mouse, the electronic device 100 to start the natural language interaction function.

The specific operation on the mouse may include but is not limited to any one of the following operations: a press and hold operation for a left button on the mouse, a press and hold operation for a right button on the mouse, a press and hold operation for both the left button and the right button on the mouse, a press and hold operation or a click operation for another physical button other than the left button and the right button on the mouse, or the like.

**The interaction method provided in embodiments of this application may be applied to a plurality of scenarios. The following describes the interaction method provided in embodiments of this application with reference to a user interface and several typical application scenarios.**

It should be noted that the following application scenarios are merely several typical application scenarios. The interaction method provided in embodiments of this application may be further applied to more other scenarios. This is not limited in embodiments of this application.

### I. Intelligent dialog box application scenario

Currently, for a cursor, in terms of role positioning, the cursor only indicates a location at which a user operation occurs, and in terms of an interaction capability, the cursor can only support the user in performing a click operation.

By implementing the interaction method provided in embodiments of this application, the cursor can serve more functions, and provide more new intelligent experience for the user.

For example, in terms of role positioning, the cursor may not only indicate the location at which the user operation occurs, but also may be a dialog box based on an interaction object.

For another example, in terms of the interaction capability, the cursor not only supports the user in performing the click operation, but also supports the user in inputting an operation instruction by using a voice or directly inputting a text by using a voice, to implement a plurality of interaction capabilities such as click, voice command, and direct input of the cursor.

In embodiments of this application, the "intelligent dialog box application scenario" may be an application scenario in which by using the interaction method provided in embodiments of this application, the electronic device 100 may provide the cursor with a capability of an intelligent dialog box, and support interaction with the user by using a natural language interaction function, so that a corresponding operation can be conveniently and quickly performed on an interaction object (for example, a picture or a document).

### 1. Perform a corresponding operation on a picture

By implementing the interaction method provided in embodiments of this application, the electronic device 100 may support the user in conveniently and quickly performing a plurality of operations on the picture, for example, performing operations such as sharing, collecting, and copying on the picture; for another example, performing an editing operation (for example, a content erasing operation, a content replacement operation, a content insertion operation, a content recognition operation, a content beautification operation, a style migration operation, or a parameter adjustment operation) on the picture. Specific types of the foregoing operations are not limited in embodiments of this application. It is easy to understand that, for different types of operations, only natural language instructions input by the user are different, and specific implementation processes are similar.

The following uses a picture content erasing operation as an example to describe a specific process of performing a corresponding operation on a picture.

**FIG. 1A to FIG. 1E** **illustrate a group of user interfaces for performing the picture content erasing operation.**

A picture in a Notes application is used as an example. Refer to FIG. 1A. A user interface 110 shown in FIG. 1A may be a user interface of the Notes application. It can be seen that the user interface 110 includes a note (for example, a note named "Rainbow Town Travel") created by the user, and the note includes a picture 111.

In this embodiment of this application, it is assumed that the electronic device 100 has established a connection to the mouse, so that a pointer cursor 112 shown in FIG. 1A is a cursor of the mouse.

It should be noted that a display style of the pointer cursor 112 is not limited in this embodiment of this application. For example, the display style may be a "water drop" style shown in FIG. 1A.

It is easy to understand that the pointer cursor 112 may respond to mouse input (for example, click input, or press and hold input) to perform an operation like selection or movement on an interface element displayed by the electronic device 100. The pointer cursor is different from a text cursor (which may also be referred to as an insertion symbol). The text cursor may trigger, in response to keyboard input, the electronic device 100 to perform text input on a text input interface. The text cursor may inform the user that the text input can be performed, or may indicate a text insertion location in a text input process.

In embodiments of this application, the user may trigger, by performing a specific operation on the mouse, the electronic device 100 to select an interaction object, and may further trigger the electronic device 100 to start a natural language interaction function. The interaction object may be an interaction object for subsequent natural language interaction, and the interaction object may be determined by the electronic device 100 by extracting and recognizing interface content at a location of the cursor or at and near the location of the cursor.

A time sequence of selecting the interaction object and starting the natural language interaction function by the electronic device 100 is not limited in embodiments of this application.

The following uses an example in which the electronic device 100 first selects the interaction object and then starts the natural language interaction function for description.

Still refer to FIG. 1A. It can be seen that a location of the pointer cursor 112 is a location of a left flower 111a in the picture 111. For example, the electronic device 100 may detect a specific operation performed by the user on the mouse, and in response to the specific operation, the electronic device 100 may extract and recognize interface content at the location of the pointer cursor 112 or at and near the location of the pointer cursor 112, to determine an interaction object. For example, the interaction object may be the left flower 111a in the picture 111, and the left flower 111a in the picture 111 is the interaction object for subsequent natural language interaction.

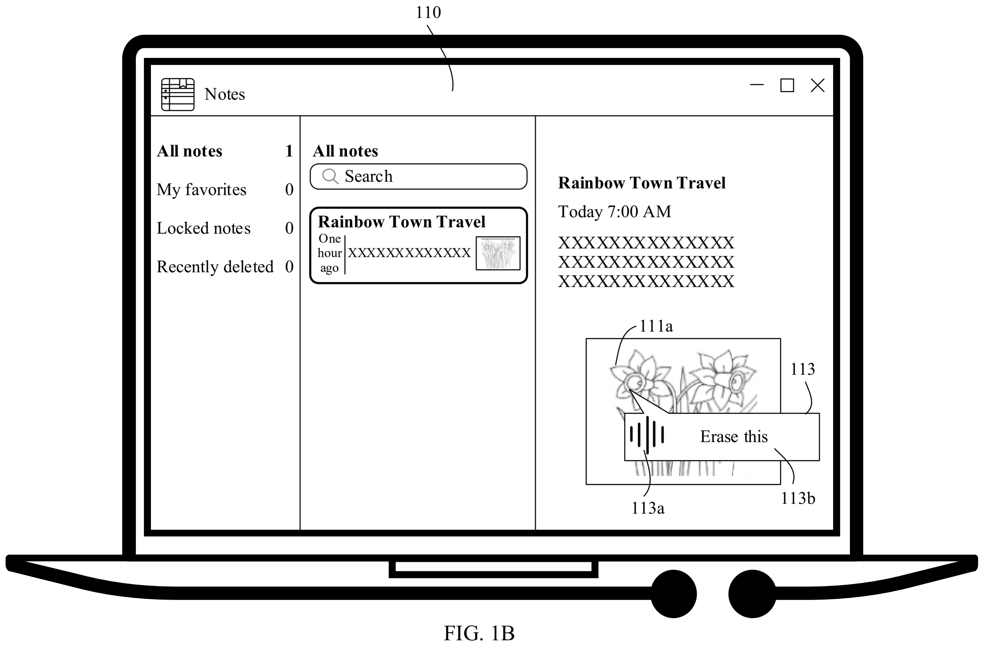

Further, refer to FIG. 1B. In response to the specific operation performed by the user on the mouse, the electronic device 100 may start the natural language interaction function. After starting the natural language interaction function, the electronic device 100 may display a natural language interaction entry. The natural language interaction entry may be used to inform the user that the electronic device 100 has started the natural language interaction function, and may be further used for subsequent natural language interaction. The natural language interaction entry displayed by the electronic device 100 may be a natural language interaction entry 113 shown in FIG. 1B.

After starting the natural language interaction function, the electronic device 100 may detect a natural language instruction input by the user. In embodiments of this application, the natural language instruction input by the user may be a voice instruction or a text instruction. The voice instruction may be input by the user via a microphone on the electronic device 100, and the text instruction may be input by the user via a keyboard connected to the electronic device 100.

Still refer to FIG. 1B. For example, the natural language instruction input by the user is the voice instruction. It is assumed that the user wants to erase the interaction object, namely, the left flower 111a in the picture 111, from the picture 111, so that the electronic device 100 may detect a related voice instruction (for example, a voice "Erase this") input by the user, and may display the detected and user-input related voice instruction (for example, a text 113b "Erase this") in a form of a text.

Optionally, after the electronic device 100 starts to detect the voice instruction input by the user, an indicator 113a may be displayed on the natural language interaction entry 113. The indicator 113a may inform the user that the electronic device 100 is detecting the voice instruction input by the user.

In some embodiments, if the specific operation performed by the user on the mouse is a press and hold operation, after the electronic device 100 starts the natural language interaction function, the electronic device 100 may start to detect, in real time, the natural language instruction input by the user, regardless of whether the user cancels the press and hold operation.

In some embodiments, if the specific operation performed by the user on the mouse is a press and hold operation, after the electronic device 100 starts to detect the voice instruction input by the user, if the electronic device 100 detects that the user does not cancel the press and hold operation for long time, the electronic device 100 may keep detecting the voice instruction input by the user; or if the electronic device 100 detects that the user cancels the press and hold operation, the electronic device 100 may stop detecting the voice instruction input by the user (that is, end voice input collection).

In some embodiments, if the specific operation performed by the user on the mouse is a press and hold operation, after the electronic device 100 detects the voice instruction input by the user, regardless of whether the user cancels the press and hold operation, if the electronic device 100 does not detect, within a preset time period, that the user continues to input a voice instruction, the electronic device 100 may determine that input of the voice instruction is completed. In some other embodiments, after the electronic device 100 detects the voice instruction input by the user, if the electronic device 100 detects that the user cancels the press and hold operation, the electronic device 100 may determine that input of the voice instruction is completed.

Further, still refer to FIG. 1B. After input of the voice instruction is completed, the electronic device 100 may further analyze the voice instruction, to determine that an operation corresponding to the voice instruction is erasing the interaction object, namely, the left flower 111a in the picture 111, from the picture 111.

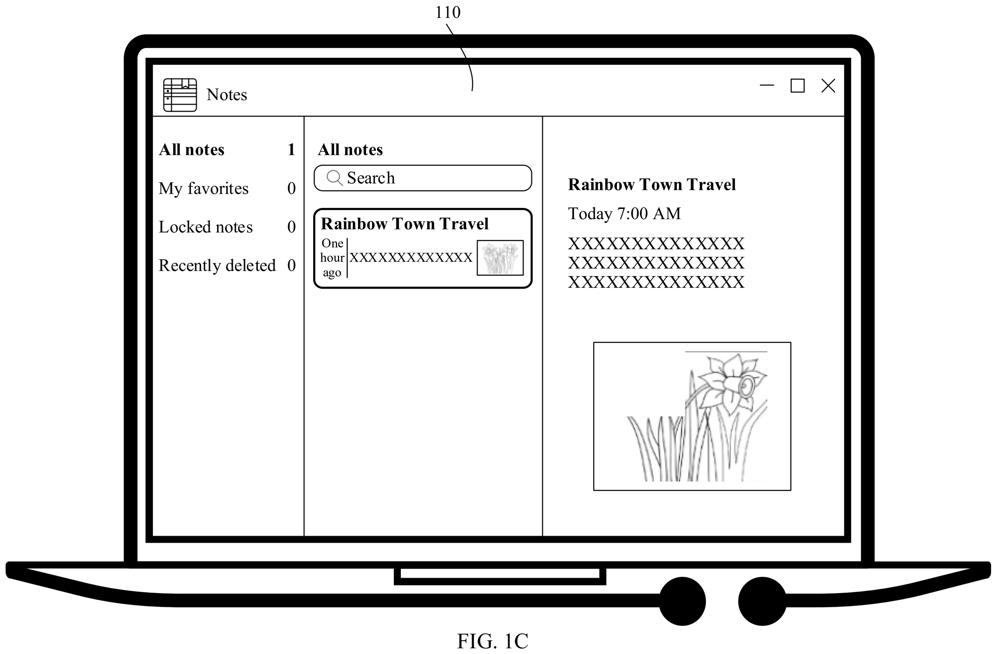

Further, the electronic device 100 may erase the interaction object, namely, the left flower 111a in the picture 111, from the picture 111 by using a related algorithm. After the erasing, as shown in FIG. 1C, the electronic device 100 may no longer display the interaction object, namely, the flower 111a, in the picture 111. In this case, the picture content erasing operation is completed.

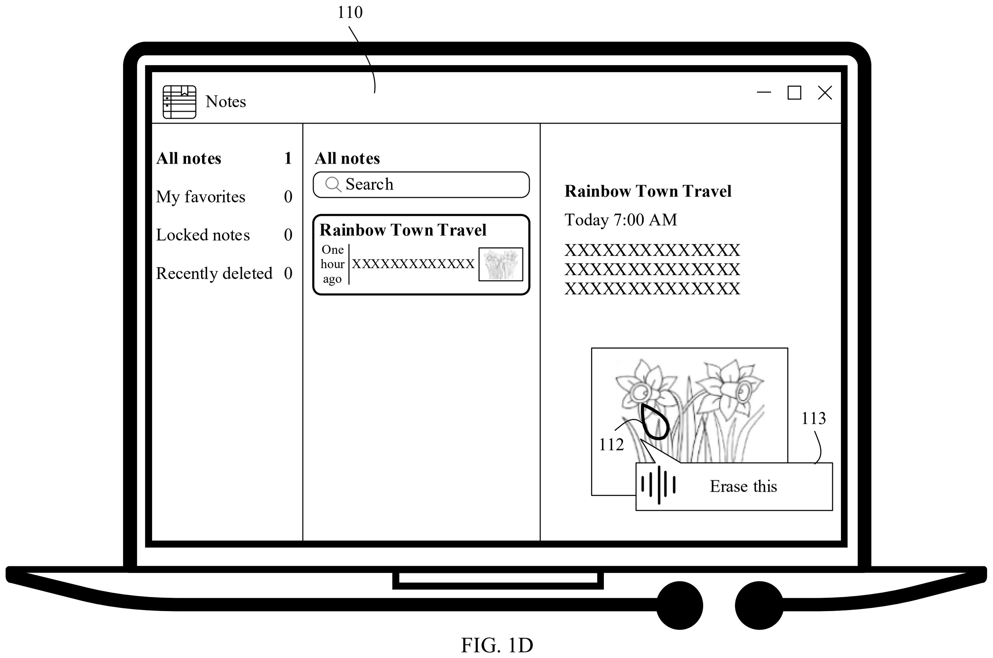

Still refer to FIG. 1B. The natural language interaction entry 113 shown in FIG. 1B may be formed by deforming the pointer cursor 112 shown in FIG. 1A. After the deformation, the electronic device 100 may display only the natural language interaction entry 113 (for example, displaying the natural language interaction entry 113 at a location of the pointer cursor 112 before the deformation), and no longer display the pointer cursor 112. In some embodiments, as shown in FIG. 1D, the natural language interaction entry 113 may not be formed by deforming the pointer cursor 112. In this case, the electronic device 100 may separately display the natural language interaction entry 113 and the pointer cursor 112, and the pointer cursor 112 is no longer hidden. Preferably, the natural language interaction entry 113 may be independently displayed near the location of the pointer cursor 112.

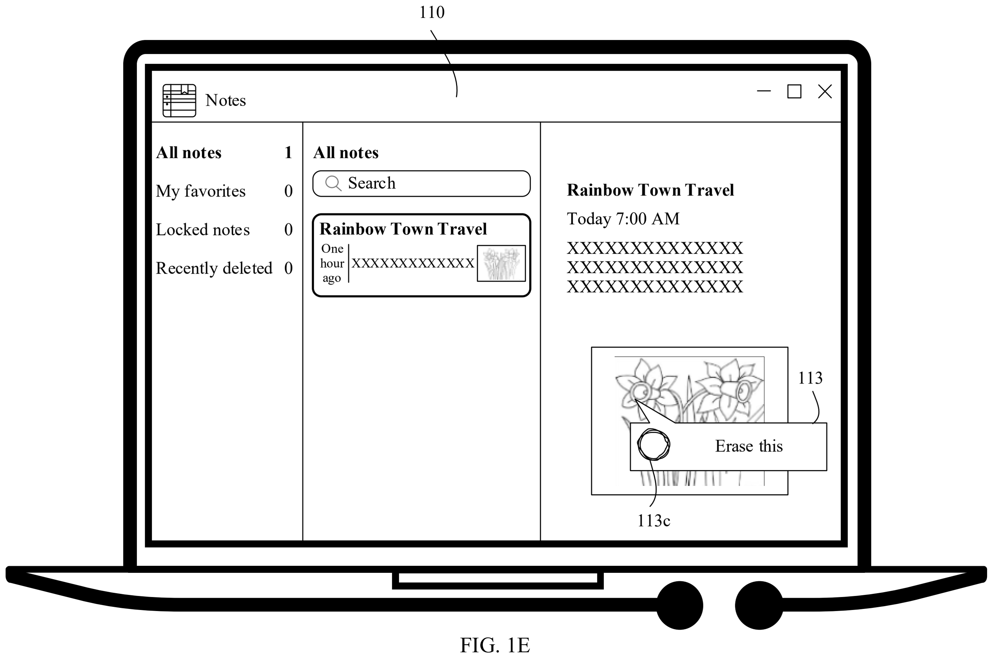

In some embodiments, as shown in FIG. 1E, after determining that input of the natural language instruction of the user is completed, the electronic device 100 may replace the indicator 113a shown in FIG. 1B with an indicator 113c shown in FIG. 1E for display. The indicator 113c may indicate that input of the natural language instruction of the user is completed.

It should be noted that the voice instruction "Erase this" for performing the picture content erasing operation is merely an example, and should not constitute a limitation on this application. It is easy to understand that the voice instruction for performing the picture content erasing operation needs to meet a specific condition. Under the condition, the electronic device 100 can determine a specific location of an object that the user wants to erase in the picture. Meeting the "specific condition" may mean that the voice instruction includes some keywords (for example, "erase") indicating an erased object and an erasing action.

It should be noted that a display style of the natural language interaction entry is not limited in embodiments of this application. A display location of the natural language interaction entry is not limited in embodiments of this application either. For example, the display location may be the location of the pointer cursor 112, or may be near the location of the pointer cursor 112, or the like. Preferably, the natural language interaction entry may be formed by deforming the pointer cursor 112. After the deformation, the natural language interaction entry may be displayed at the location of the pointer cursor 112 before the deformation. In this way, a process in which the pointer cursor 112 is deformed into the natural language interaction entry can provide more dynamic and vivid visual experience for the user.

It should be noted that a meaning represented by the "natural language interaction entry" has been recorded in embodiments of this application. A name of the "natural language interaction entry" does not constitute any limitation on embodiments of this application. In some other embodiments of this application, the natural language interaction entry may be considered as a type of an intelligent interaction entry, and may also be referred to as a natural language (or voice/text) recognition box/prompt box/recognition bar/prompt bar/recognition window/prompt window or the like.

It should be noted that, in the interaction method provided in embodiments of this application, an operation of selecting the interaction object by the user and an operation of triggering the electronic device 100 to start the natural language interaction function may be the same operation. A specific type of the operation is not limited in embodiments of this application.

It should be noted that, in the interaction method provided in embodiments of this application, whether the electronic device 100 needs to be triggered to start the natural language interaction function after the user selects the interaction object may be autonomously set by the user, or may be set by a system of the electronic device 100 by default. This is not limited in embodiments of this application.

It is easy to understand that, not limited to the foregoing corresponding operation on the picture, the interaction method provided in embodiments of this application may further support a corresponding operation on a video, for example, performing an operation like sharing, collecting, or playing on the video, for another example, performing an editing operation (for example, a specific clip trimming operation or a specific image capturing operation) on the video, or the like. A specific process thereof is similar to the foregoing process of performing a corresponding operation on the picture. Details are not described herein again.

In an interface of a video playing application, a plurality of videos to be played may be usually displayed. According to the interaction method provided in embodiments of this application, when a video is in a focused state, the electronic device 100 may support the user in inputting a natural language instruction to perform a corresponding operation (for example, an operation of playing, sharing, collecting, or editing) on the video in the focused state. This is convenient and quick, and improves interaction efficiency and user experience.

For example, as shown in FIG. 1F, a user interface shown in FIG. 1F may include options corresponding to a plurality of to-be-played videos (for example, an option 121 corresponding to a video 1, an option 122 corresponding to a video 2, and an option 123 corresponding to a video 3). The user may move the pointer cursor 112 to an area in which a corresponding option is located to trigger the electronic device 100 to place a corresponding video in the focused state. For example, as shown in FIG. 1F, the pointer cursor 112 is in an area in which the option 121 is located, so that the video 1 is placed in the focused state. In this case, the electronic device 100 may support the user in playing a video by performing a click operation. In embodiments of this application, the electronic device 100 may further support the user in performing a corresponding operation on the video 1 in the focused state by triggering a natural language interaction function to input a natural language instruction. For example, the user may input a natural language instruction (for example, "Play this video") shown in FIG. 1G to play the video 1. For another example, the user may also input a natural language instruction to start playing the video 1 at a specific playback progress. For a process in which the user triggers the natural language interaction function, refer to content in the foregoing embodiment. Details are not described herein again.

### 2. Perform a corresponding operation on a document

By implementing the interaction method provided in embodiments of this application, the electronic device 100 may support the user in conveniently and quickly performing a plurality of operations on the document, for example, performing operations such as sharing, collecting, content summarization, searching, opening, and specific format conversion on the document; for another example, performing an editing operation (for example, a content summarization operation, a picture insertion operation, or a text insertion operation) on the document. Specific types of the foregoing operations are not limited in embodiments of this application. It is easy to understand that, for different types of operations, only natural language instructions input by the user are different, and specific implementation processes are similar.

The following uses a content summarization operation, a picture insertion operation, a search operation, an opening operation, and a text insertion operation as examples to describe specific processes of performing corresponding operations on a document.

### (1) Document content summarization (for example, text paragraph summarization)

**FIG. 2A to FIG. 2E** **illustrate a group of user interfaces for performing the document content summarization operation.**

An email in an email application is used as an example. Refer to FIG. 2A. A user interface 210 shown in FIG. 2A may be a user interface of the email application. It can be seen that the user interface 210 includes an email (for example, an email whose subject is "Work meeting minutes") that the user is editing.

In this embodiment of this application, it is also assumed that the electronic device 100 has established a connection to the mouse, so that the pointer cursor 112 shown in FIG. 2A is a cursor of the mouse. For descriptions of the pointer cursor 112, refer to the foregoing related content. Details are not described herein again.

In this embodiment of this application, the user may select a target text (namely, the interaction object) by performing a specific operation on the mouse, and may further trigger the electronic device 100 to start the natural language interaction function.

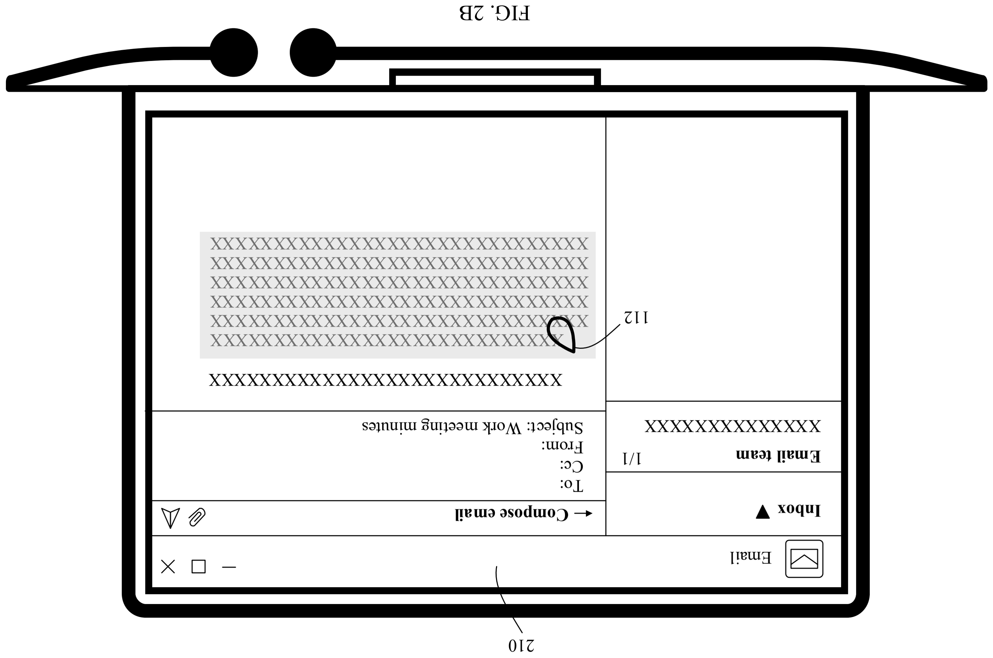

Still refer to FIG. 2A. It is assumed that the user wants to perform a summarization operation on a text paragraph 211 (namely, the target text) in the email body, so that the electronic device 100 may detect a drag operation performed by the user on the mouse. In response to the drag operation, the electronic device 100 may move the pointer cursor 112 from a location shown in FIG. 2A to a location of the text paragraph 211 (for example, a start location of the text paragraph 211) shown in FIG. 2B. Further, the electronic device 100 may detect a specific operation performed by the user on the mouse. In response to the specific operation, the electronic device 100 may select the text paragraph 211, and may use the text paragraph 211 as the interaction object for subsequent natural language interaction.

It should be noted that a range of a text selected by the electronic device 100 may be set according to a preset rule by using the foregoing specific operation. For example, the text selected by the electronic device 100 may be only a text at a location of the specific operation, or may be a text of a larger range than the location of the specific operation. This is not limited in embodiments of this application. In this embodiment of this application, only an example in which the range of the text selected by the electronic device 100 by using the foregoing specific operation is the entire text paragraph (for example, the text paragraph 211) is used.

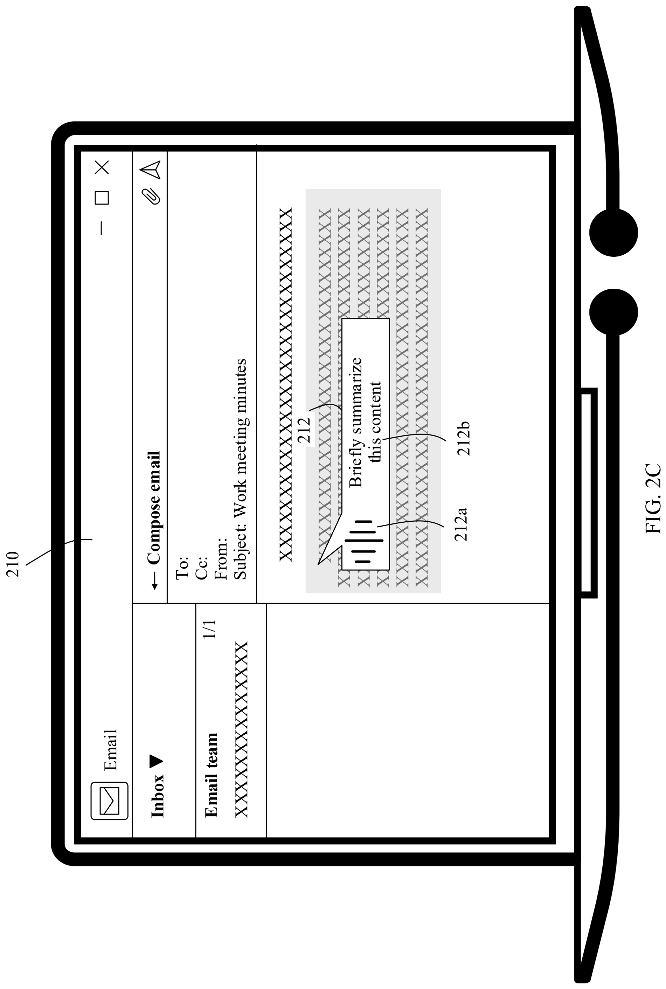

Further, refer to FIG. 2C. In response to the specific operation performed by the user on the mouse, the electronic device 100 may start the natural language interaction function. After starting the natural language interaction function, the electronic device 100 may display a natural language interaction entry 212. The natural language interaction entry 212 may be used to inform the user that the electronic device 100 has started the natural language interaction function, and may be further used for subsequent natural language interaction.

Optionally, after the electronic device 100 starts to detect the voice instruction input by the user, an indicator 212a may be displayed on the natural language interaction entry 212. The indicator 212a may inform the user that the electronic device 100 is detecting the voice instruction input by the user.

Preferably, the natural language interaction entry 212 may be formed by deforming the pointer cursor 112. After the deformation, the natural language interaction entry 212 may be displayed at the location of the pointer cursor 112 before the deformation.

For an occasion on which the electronic device 100 starts to detect the natural language instruction input by the user and an occasion on which the electronic device 100 ends detecting the natural language instruction input by the user, refer to related content in the foregoing performing a corresponding operation on the picture. Details are not described herein again.

Still refer to FIG. 2C. For example, the natural language instruction input by the user is a voice instruction. It is assumed that the user wants to perform a summarization operation on the text paragraph 211 in the email body, so that the electronic device 100 may detect a related voice instruction (for example, a voice "Briefly summarize this content") input by the user, and may display the detected and user-input related voice instruction (for example, a text 212b "Briefly summarize this content") in a form of a text.

Further, still refer to FIG. 1B. After input of the voice instruction is completed, the electronic device 100 may further analyze the voice instruction, to determine that an operation corresponding to the voice instruction is briefly summarizing the selected text (namely, the text paragraph 211).

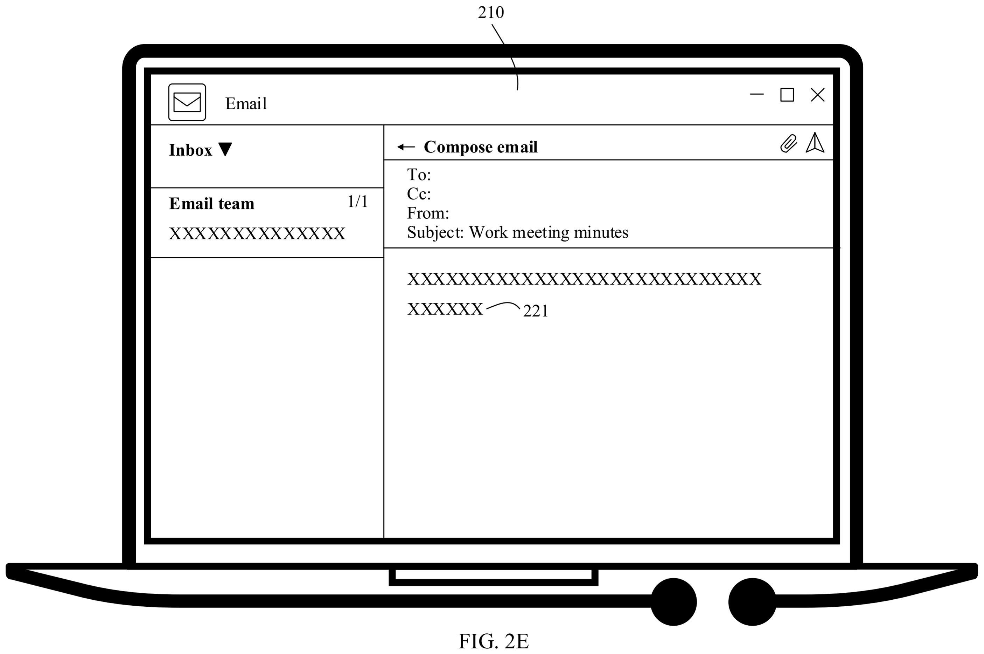

Further, the electronic device 100 may briefly summarize the selected text (namely, the text paragraph 211) by using a related algorithm. After the brief summarization is completed, as shown in FIG. 2D, the electronic device 100 may display a window 220. The window 220 may include a briefly summarized text 221 (for example, "XXXXXX"), and may further include an option 222 and an option 223. The option 222 may prompt the user to cancel display of the window 220 and not replace the selected text paragraph 211 with the briefly summarized text 221, and the option 223 may prompt the user to replace the selected text paragraph 211 with the briefly summarized text 221. If the electronic device 100 detects that the user selects, by using a voice instruction or a click operation (for example, a click operation performed on the option 223 by using the mouse), to replace the text paragraph 211 with the briefly summarized text 221, as shown in FIG. 2E, the electronic device 100 may replace the text paragraph 211 shown in FIG. 2A with the briefly summarized text 221, and display the briefly summarized text 221. In this case, the text paragraph summarization operation is completed.

In some embodiments, after performing briefly summarization on the selected text (namely, the text paragraph 211), the electronic device 100 may directly replace the text paragraph 211 with the briefly summarized text, and does not display the window 220 shown in FIG. 2D.

In some embodiments, still refer to FIG. 2D. After determining that input of the natural language instruction of the user is completed, the electronic device 100 may replace the indicator 212a shown in FIG. 2C with an indicator 212c shown in FIG. 2D for display. The indicator 212c may indicate that input of the natural language instruction of the user is completed.

In some embodiments, the operation of triggering the electronic device 100 to select the text may not be the specific operation performed by the user on the mouse, for example, may be an operation of pressing and holding the left button of the mouse and dragging the mouse. For example, still refer to FIG. 2B. The electronic device 100 may detect the operation of pressing and holding the left button of the mouse and dragging the mouse by the user to move the pointer cursor 112 from the start location of the text paragraph 211 to an end location of the text paragraph 211. In response to the operation, the electronic device 100 may select the text paragraph 211. It is easy to understand that, in this case, after the text paragraph 211 is selected, the user further needs to trigger, by performing a specific operation on the mouse, the electronic device to start the natural language interaction function.

It should be noted that the voice instruction "Briefly summarize this content" for performing the document content summarization operation is merely an example, and should not constitute a limitation on this application. It is easy to understand that the voice instruction for performing the document content summarization operation needs to meet a specific condition. Under the condition, the electronic device 100 can determine an intention of the user to summarize document content. Meeting the "specific condition" may mean that the voice instruction includes some keywords (for example, "simplify", "summarize", "outline", "briefly describe", or "abbreviate") indicating a document content summarization action.

### (2) Picture insertion

**FIG. 3A to FIG. 3D** **illustrate a group of user interfaces for performing the picture insertion operation.**

A note from a Notes application is used as an example. Refer to FIG. 3A. A user interface 310 shown in FIG. 3A may be a user interface of the Notes application. It can be seen that the user interface 310 includes a note (for example, a note named "Found a cat by the roadside") created by the user.

In this embodiment of this application, it is also assumed that the electronic device 100 has established a connection to the mouse, so that the pointer cursor 112 shown in FIG. 3A is a cursor of the mouse. For descriptions of the pointer cursor 112, refer to the foregoing related content. Details are not described herein again.

In this embodiment of this application, the user may trigger, by performing a specific operation on the mouse, the electronic device 100 to start the natural language interaction function.

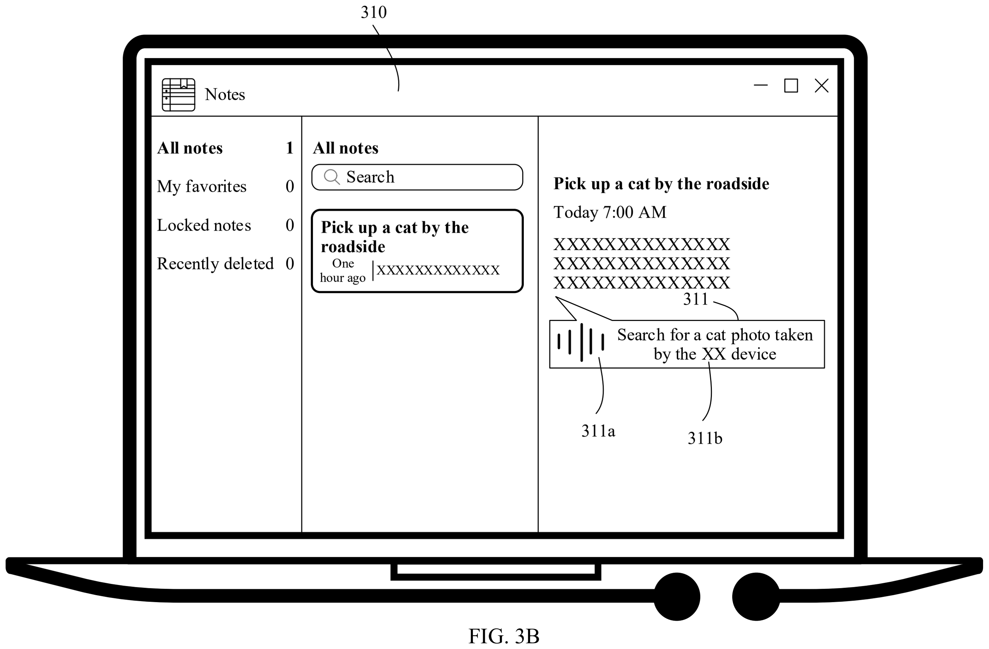

Still refer to FIG. 3A. It is assumed that the user wants to perform a picture insertion operation at the location of the pointer cursor 112, so that the electronic device 100 may detect a specific operation performed by the user on the mouse. In response to the specific operation, the electronic device 100 may start the natural language interaction function. After starting the natural language interaction function, as shown in FIG. 3B, the electronic device 100 may display a natural language interaction entry 311. The natural language interaction entry 311 may inform the user that the electronic device 100 has started the natural language interaction function, and may be further used for subsequent natural language interaction.

Optionally, after the electronic device 100 starts to detect the voice instruction input by the user, an indicator 311a may be displayed on the natural language interaction entry 311. The indicator 311a may inform the user that the electronic device 100 is detecting the voice instruction input by the user.

Preferably, the natural language interaction entry 311 may be formed by deforming the pointer cursor 112. After the deformation, the natural language interaction entry 311 may be displayed at the location of the pointer cursor 112 before the deformation.

For an occasion on which the electronic device 100 starts to detect the natural language instruction input by the user and an occasion on which the electronic device 100 ends detecting the natural language instruction input by the user, refer to related content in the foregoing performing a corresponding operation on the picture. Details are not described herein again.

Still refer to FIG. 3B. For example, the natural language instruction input by the user is a voice instruction. It is assumed that the user wants to obtain a picture related to a cat, to help subsequently insert the obtained picture related to the cat into the location of the pointer cursor 112 shown in FIG. 3A, so that the electronic device 100 may detect a related voice instruction (for example, a voice "Search for a cat photo taken by the XX device") input by the user, and may display the detected and user-input related voice instruction (for example, a text 311b "Search for a cat photo taken by the XX device") in a form of a text.

Further, still refer to FIG. 3B. After input of the voice instruction is completed, the electronic device 100 may further analyze the voice instruction, to determine that an operation corresponding to the voice instruction is searching for a cat photo taken by the XX device (for example, a mobile phone or another device).

It is easy to understand that the XX device may be a device that establishes a communication connection to the electronic device 100, and the electronic device 100 may obtain, based on the communication connection, content (for example, a picture, a video, or a document) stored on the XX device.

Further, the electronic device 100 may obtain a picture related to a cat from the XX device (for example, obtain a stored cat photo from a gallery application of the XX device). After the obtaining is completed, as shown in FIG. 3C, the electronic device 100 may display a window 320. The window 320 may include pictures related to a cat (for example, a picture 321 and a picture 322) that are on the XX device and that have been obtained by the electronic device 100.

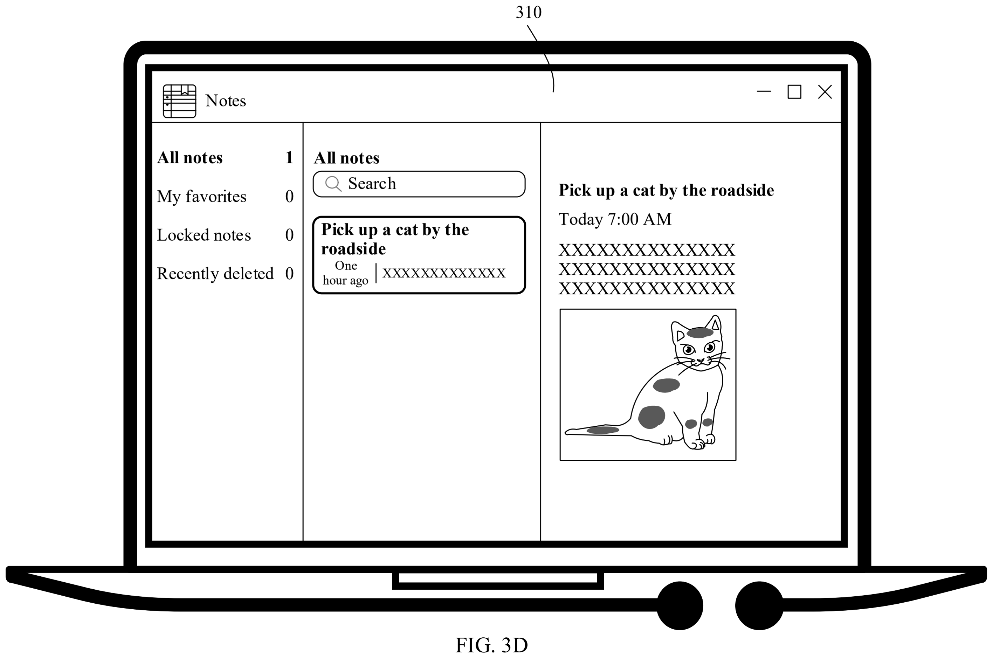

Further, still refer to FIG. 3C. It is assumed that the user wants to insert one of the obtained pictures, for example, the picture 321, into the location of the pointer cursor 112 shown in FIG. 3A, so that the electronic device 100 may detect an operation (for example, a click operation) performed by the user on the picture 321. In response to the operation, as shown in FIG. 3D, the electronic device 100 may insert the picture 321 into the location of the pointer cursor 112 shown in FIG. 3A, and display the picture 321. In this case, the picture insertion operation is completed.

In some embodiments, when the electronic device 100 obtains a plurality of pictures, the electronic device 100 may also support the user in selecting pictures in batches. Further, the electronic device 100 may insert the plurality of pictures selected by the user in batches into the document. This is convenient and quick, and simplifies user operations.

In some embodiments, still refer to FIG. 3C. After determining that input of the natural language instruction of the user is completed, the electronic device 100 may replace the indicator 311a shown in FIG. 3B with an indicator 311c shown in FIG. 3C for display. The indicator 311c may indicate that input of the natural language instruction of the user is completed.

Not limited to the foregoing picture insertion operation, another type of content (for example, a video) insertion operation may be further implemented in the document by implementing the interaction method provided in embodiments of this application.

Not limited to the foregoing obtaining inserted content across devices, the electronic device 100 may also obtain inserted content locally or on a cloud based on the natural language instruction input by the user.

It should be noted that the voice instruction "Search for a cat photo taken by the XX device" for performing the content obtaining operation is merely an example, and should not constitute a limitation on this application. It is easy to understand that the voice instruction for performing the content obtaining operation needs to meet a specific condition. Under the condition, the electronic device 100 can determine an intention of the user to obtain content. Meeting the "specific condition" may mean that the voice instruction includes some keywords indicating content to be obtained (for example, "cat photo") and a content obtaining action (for example, "obtain", "find", "search for", "search", or "query").

### (3) Document search and opening

By implementing the interaction method provided in embodiments of this application, the electronic device 100 may search for a corresponding document (for example, search for a corresponding document locally) based on the natural language instruction input by the user. After finding the document, the electronic device 100 may further directly open the document. In this way, when the user needs to view a document, the user does not need to search for the document in a storage path corresponding to the document. This is convenient, quick, and efficient, simplifies user operations, and improves user experience.

**FIG. 4A to FIG. 4D** **illustrate a group of user interfaces for performing a document search operation.**

Refer to FIG. 4A. A user interface 410 shown in FIG. 4A may be a desktop of the electronic device 100.

In this embodiment of this application, it is also assumed that the electronic device 100 has established a connection to the mouse, so that the pointer cursor 112 shown in FIG. 4A is a cursor of the mouse. For descriptions of the pointer cursor 112, refer to the foregoing related content. Details are not described herein again.

In this embodiment of this application, the user may trigger, by performing a specific operation on the mouse, the electronic device 100 to start the natural language interaction function.

Still refer to FIG. 4A. It is assumed that the user wants to perform the document search operation and the opening operation, so that the electronic device 100 may detect a specific operation performed by the user on the mouse. In response to the specific operation, the electronic device 100 may start the natural language interaction function. After starting the natural language interaction function, as shown in FIG. 4B, the electronic device 100 may display a natural language interaction entry 411. The natural language interaction entry 411 may inform the user that the electronic device 100 has started the natural language interaction function, and may be further used for subsequent natural language interaction.

Optionally, after the electronic device 100 starts to detect the voice instruction input by the user, an indicator 411a may be displayed on the natural language interaction entry 411. The indicator 411a may inform the user that the electronic device 100 is detecting the voice instruction input by the user.

Preferably, the natural language interaction entry 411 may be formed by deforming the pointer cursor 112. After the deformation, the natural language interaction entry 411 may be displayed at the location of the pointer cursor 112 before the deformation.

For an occasion on which the electronic device 100 starts to detect the natural language instruction input by the user and an occasion on which the electronic device 100 ends detecting the natural language instruction input by the user, refer to related content in the foregoing performing a corresponding operation on the picture. Details are not described herein again.

Still refer to FIG. 4B. For example, the natural language instruction input by the user is a voice instruction. It is assumed that the user wants to open a PowerPoint (PPT) document edited yesterday, so that the electronic device 100 may detect a related voice instruction (for example, a voice "Open the PPT document that I edited yesterday") input by the user, and may display the detected and user-input related voice instruction (for example, a text 411b "Open the PPT document that I edited yesterday") in a form of a text.

Further, still refer to FIG. 4B. After input of the voice instruction is completed, the electronic device 100 may further analyze the voice instruction, to determine that an operation corresponding to the voice instruction is opening the PPT document edited by the user yesterday.

Further, the electronic device 100 may locally search all PPT documents edited by the user yesterday. After the search is completed, as shown in FIG. 4C, the electronic device 100 may display a window 420. The window 420 may include document entries (for example, a document entry 421 and a document entry 422) corresponding to all PPT documents that are edited by the user yesterday and that are found by the electronic device 100 locally. It can be seen that the document entry 421 is a document entry corresponding to a document 1, and the document entry 422 is a document entry corresponding to a document 2. Each document entry may include related information of the document (for example, a document icon, a document name, and latest modification time of the document).

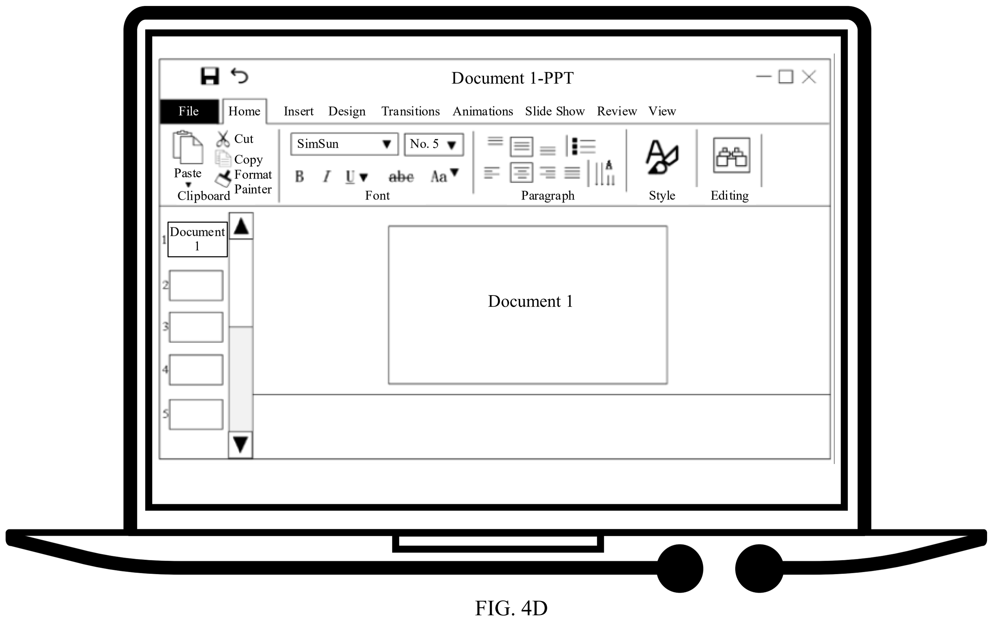

Further, still refer to FIG. 4C. It is assumed that the user wants to open one of the documents, for example, the document 1, so that the electronic device 100 may detect an operation (for example, a click operation) performed by the user on the document entry 421. In response to the operation, as shown in FIG. 4D, the electronic device 100 may open the document 1, and display a user interface corresponding to the document 1. In this case, the document search and opening operations are completed.

In some embodiments, the user may trigger, by inputting a voice instruction, the electronic device 100 to open one of the documents shown in FIG. 4C that are found locally.

In some embodiments, when only one document is found in all documents by the electronic device 100, the electronic device 100 may not display the window 420 shown in FIG. 4C, but may directly open the document and display a user interface corresponding to the document.

In some embodiments, still refer to FIG. 4C. After determining that input of the natural language instruction of the user is completed, the electronic device 100 may replace the indicator 411a shown in FIG. 4B with an indicator 411c shown in FIG. 4C for display. The indicator 411c may indicate that input of the natural language instruction of the user is completed.

It is easy to understand that the foregoing merely uses an example in which the document search and opening operations are performed on the desktop of the electronic device 100. Not limited to the desktop of the electronic device 100 (which may be any location on the desktop to trigger the natural language interaction function), the interaction method provided in embodiments of this application may also support the document search and opening operations on another user interface of the electronic device 100 (which may be any location in another user interface to trigger the natural language interaction function). It is easy to understand that, in the foregoing document search scenario, there may be no recognizable interaction object at a location at which the natural language interaction function is triggered.

It is easy to understand that the foregoing merely uses the document search operation as an example. Not limited to the document search operation, the interaction method provided in embodiments of this application may also support the user in performing another search operation (for example, a picture search operation, a video search operation, or a folder search operation).

It should be noted that the foregoing voice instruction "Open the PPT document that I edited yesterday" for performing the document search and opening operations is merely an example, and should not constitute a limitation on this application. It is easy to understand that the voice instruction for performing the content obtaining operation needs to meet a specific condition. Under the condition, the electronic device 100 can determine an intention of the user to search for or open a document. Meeting the "specific condition" may mean that the voice instruction includes some keywords (for example, "search", "open", "search for", and "query") indicating a document to be searched for or opened, or a search or opening action.

### (4) Text insertion

By implementing the interaction method provided in embodiments of this application, the electronic device 100 may intelligently recognize whether the user intends to input an operation instruction or input a text. After the recognition is completed, the electronic device 100 may perform a corresponding operation (for example, responding to the operation instruction or inserting the text) based on input of the user. This is convenient, quick, and efficient, simplifies user operations, and improves user experience.

In this embodiment of this application, when the cursor is the pointer cursor, the electronic device 100 may determine that the user intends to input the operation instruction; or when the cursor is the text cursor, the electronic device 100 may determine that the user intends to input the text.

**FIG. 5A to FIG. 5F** **illustrate a group of user interfaces for performing a text insertion operation.**

An email in an email application is used as an example. Refer to FIG. 5A. A user interface 510 shown in FIG. 5A may be a user interface of the email application. It can be seen that the user interface 510 includes an email (for example, an email whose subject is "Reply: Work summary") that the user is editing.

In this embodiment of this application, it is also assumed that the electronic device 100 has established a connection to the mouse, so that the pointer cursor 112 shown in FIG. 5A is a cursor of the mouse. For descriptions of the pointer cursor 112, refer to the foregoing related content. Details are not described herein again.

In this embodiment of this application, the user may trigger, by performing a specific operation on the mouse, the electronic device 100 to start the natural language interaction function.

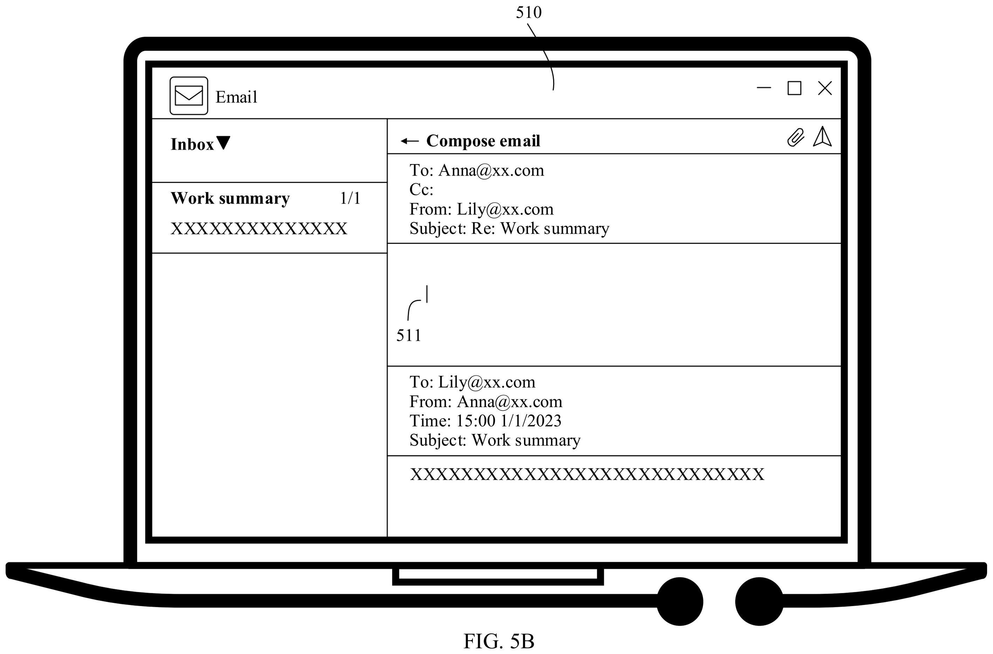

Still refer to FIG. 5A. It is assumed that the user wants to input a text in a body editing area of the email, so that the electronic device 100 may detect that the user performs a drag operation on the mouse. In response to the drag operation, the electronic device 100 may move the pointer cursor 112 from a location shown in FIG. 5A to a location in the body editing area of the email shown in FIG. 5B, and may deform the pointer cursor 112 into a text cursor 511 shown in FIG. 5B for display.

It should be noted that a display style of the text cursor 511 is not limited in this embodiment of this application. For example, the display style may be a "|" (vertical line) style shown in FIG. 5B, or may be an "I" shape style.

Further, the electronic device 100 may detect a specific operation performed by the user on the mouse. In response to the specific operation, the electronic device 100 may start the natural language interaction function. Because the cursor currently displayed by the electronic device 100 is the text cursor, the electronic device 100 may determine that the user intends to insert the text into the body editing area of the email.

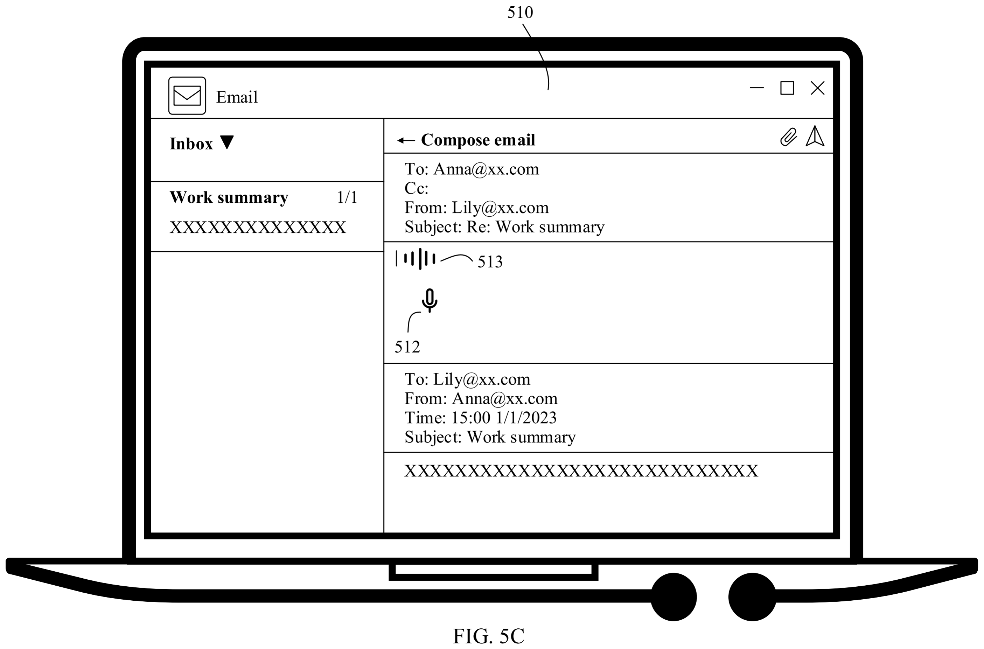

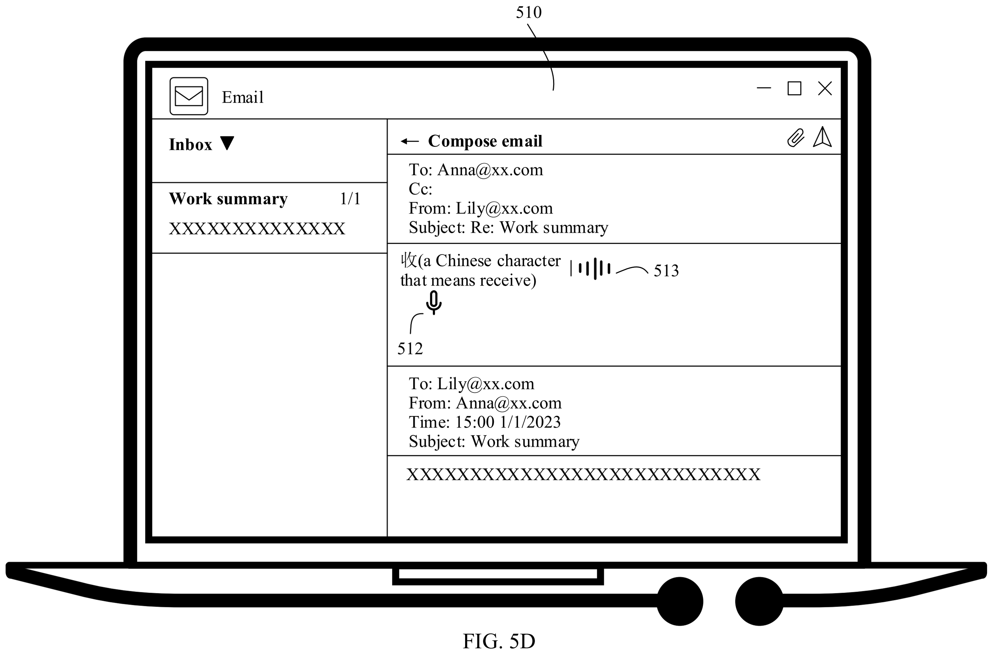

Further, as shown in FIG. 5C, for example, the user performs text input by using a voice. The electronic device 100 may detect a text input by the user by using a voice. In a process in which the user performs text input by using a voice, as shown in FIG. 5D to FIG. 5E, the electronic device 100 may insert the text (for example, a text " 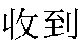 _{∘}" (Chinese characters that mean "Received.")) in real time based on the voice input by the user. The text is inserted into and displayed in the body editing area of the email until input of the voice of the user is completed. The electronic device 100 then inserts, into the body editing area of the email, all the text input by the user by using the voice, and displays the text. In this case, the text insertion operation is completed.

For an occasion on which the electronic device 100 starts to detect the voice input by the user and an occasion on which the electronic device 100 ends detecting the voice input by the user, refer to related content in the foregoing performing a corresponding operation on the picture. Details are not described herein again.

Optionally, still refer to FIG. 5C. After starting the natural language interaction function, the electronic device 100 may deform the text cursor 511 shown in FIG. 5B to an indicator 512 shown in FIG. 5C. The indicator 512 may prompt the user to perform text input by using a voice.

Optionally, still refer to FIG. 5C. After starting the natural language interaction function, the electronic device 100 may display an indicator 513. The indicator 513 may inform the user that the electronic device 100 is detecting voice input of the user. Still refer to FIG. 5D and FIG. 5E. A display location of the indicator 513 may also move as the text is continuously inserted.

Refer to FIG. 5F. After the voice input is completed, the electronic device 100 may cancel display of the indicator 513, and may further deform the indicator 512 back to the original text cursor 511.

By using the interaction method provided in embodiments of this application, the electronic device 100 may further support the user in performing a corresponding operation on the inserted text. The following uses a translation operation as an example for description.

**FIG. 5G to FIG. 5J** **illustrate a group of user interfaces for performing a text translation operation.**

Refer to FIG. 5G. After selecting the text (for example, " 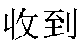 _{∘} ") to be translated, the electronic device 100 may deform the text cursor to the pointer cursor 112 when the cursor is located in an area in which the selected text is located (the text cursor may still be displayed when the cursor is located in an editing area outside the area in which the selected text is located). Further, the electronic device 100 may detect a specific operation performed by the user on the mouse. In response to the specific operation, the electronic device 100 may start the natural language interaction function. Because the cursor currently displayed by the electronic device 100 is the pointer cursor, the electronic device 100 may determine that the user intends to input an operation instruction.

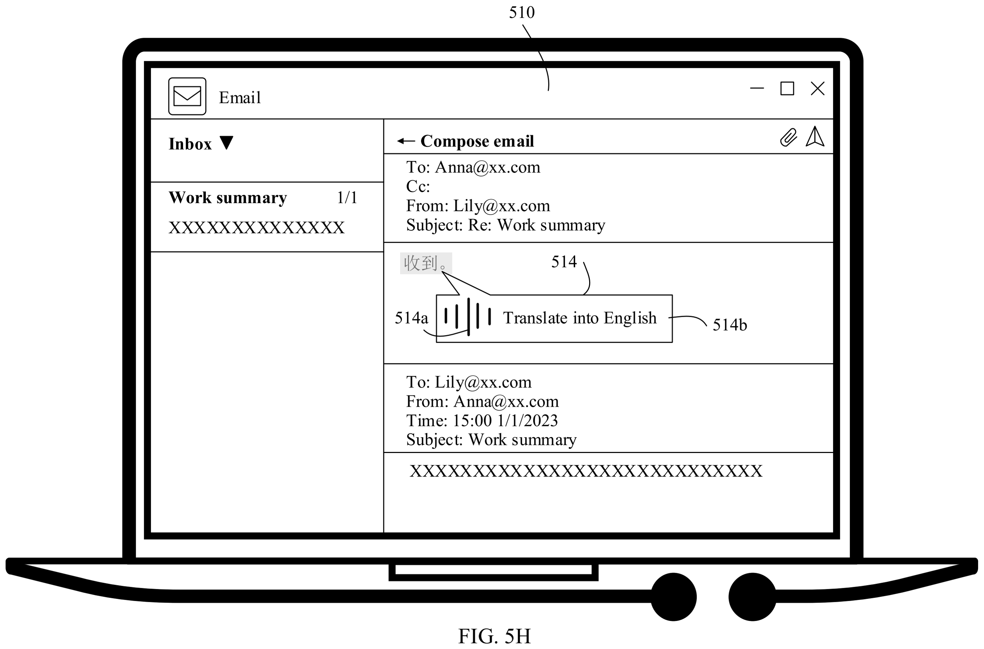

Further, refer to FIG. 5H. After starting the natural language interaction function, the electronic device 100 may display a natural language interaction entry 514. The natural language interaction entry 514 may be used to inform the user that the electronic device 100 has started the natural language interaction function, and may be further used for subsequent natural language interaction.

Optionally, after the electronic device 100 starts to detect the voice instruction input by the user, an indicator 514a may be displayed on the natural language interaction entry 514. The indicator 514a may inform the user that the electronic device 100 is detecting the voice instruction input by the user.

Preferably, the natural language interaction entry 514 may be formed by deforming the pointer cursor 112. After the deformation, the natural language interaction entry 514 may be displayed at the location of the pointer cursor 112 before the deformation.

For an occasion on which the electronic device 100 starts to detect the natural language instruction input by the user and an occasion on which the electronic device 100 ends detecting the natural language instruction input by the user, refer to related content in the foregoing performing a corresponding operation on the picture. Details are not described herein again.

Still refer to FIG. 5H. For example, the natural language instruction input by the user is a voice instruction. It is assumed that the user wants to perform a translation operation on the selected text (for example, " 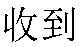 _{∘} "), so that the electronic device 100 may detect a related voice instruction (for example, a voice "Translate into English") input by the user, and may display the detected and user-input related voice instruction (for example, a text 514b "Translate into English") in a form of a text.

Further, still refer to FIG. 5H. After input of the voice instruction is completed, the electronic device 100 may further analyze the voice instruction, to determine that an operation corresponding to the voice instruction is translating the selected text (for example, " 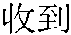 _{∘} ") into English.

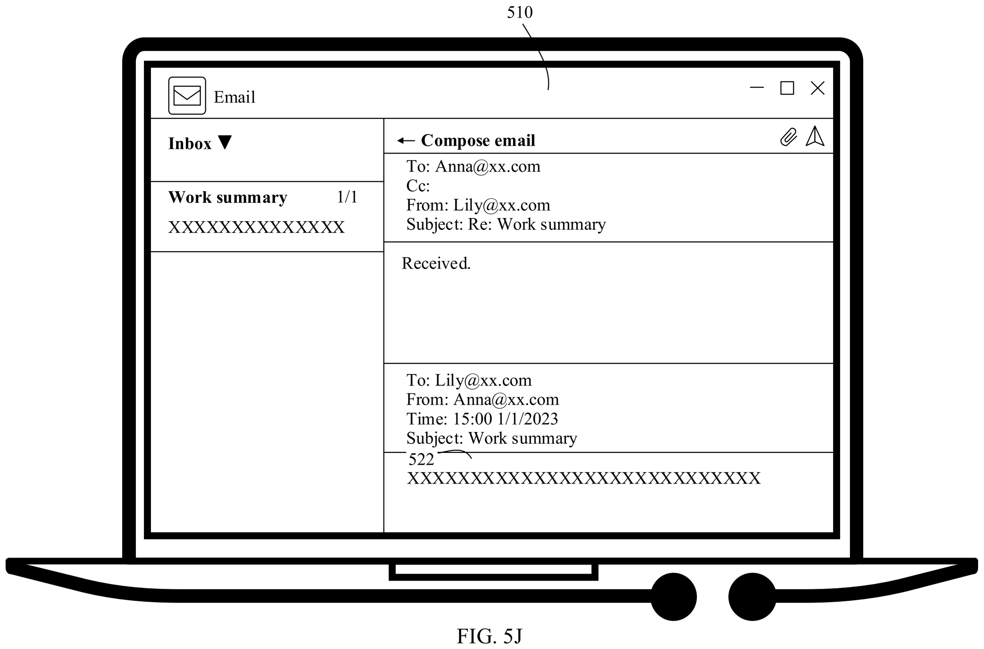

Further, the electronic device 100 may translate the selected text into English. After the translation is completed, as shown in FIG. 5I, the electronic device 100 may display a window 520. The window 520 may include a translated text 521 (for example, "Received."), and may further include an option 522 and an option 523. The option 522 may prompt the user to cancel display of the window 520 and not replace the selected text (for example, " 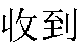 _{∘} ") with the translated text 521. The option 523 may prompt the user to replace the selected text with the translated text 521. If the electronic device 100 detects that the user selects, by using a voice instruction or a click operation (for example, a click operation performed on the option 523 by using the mouse), to replace the selected text with the translated text 521, as shown in FIG. 5J, the electronic device 100 may replace the selected text with the translated text 521 and display the translated text 521. In this case, the text translation operation is completed.

In some embodiments, after the electronic device 100 translates the selected text (for example, " 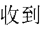 _{∘} "), the electronic device 100 may alternatively directly replace the selected text (for example, " 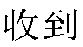 _{∘} ") with the translated text 521 (for example, "Received."), without displaying the window 520 as shown FIG. 5I.

In some embodiments, still refer to FIG. 5I. After determining that input of the natural language instruction of the user is completed, the electronic device 100 may replace the indicator 514a shown in FIG. 5H with an indicator 514c shown in FIG. 5I for display. The indicator 514c may indicate that input of the natural language instruction of the user is completed.

It should be noted that the voice instruction "Translate into English" for performing the text translation operation is merely an example, and should not constitute a limitation on this application. It is easy to understand that the voice instruction for performing the text translation operation needs to meet a specific condition. Under the condition, the electronic device 100 can determine an intention of the user to perform the text translation operation. Meeting the "specific condition" may mean that the voice instruction includes some keywords (for example, a name of a language to be translated/converted into, a keyword "translate", or a keyword "convert") indicating that the user wants to perform the text translation operation.

It should be noted that the foregoing corresponding operations performed on the document are merely described by using the five operations of document content summarization, picture insertion, document search, opening, and text insertion as examples, and are not limited to the five operations. This is not limited in embodiments of this application.

It should be noted that the foregoing merely uses performing corresponding operations on the picture and the document as an example to describe the interaction method provided in embodiments of this application. This is not limited thereto. By implementing the interaction method provided in embodiments of this application, more interaction objects (for example, more other interactive interface elements) may be further operated. This is not limited in embodiments of this application.

### II. Intelligent menu application scenario

Currently, a menu function is fixed and undiversified, and can be set only based on a type of an interaction object. In addition, for a complex function, the user needs to click a multi-level menu to complete the function. Operations are complex.

By implementing the interaction method provided in embodiments of this application, the electronic device 100 may provide a more intelligent menu function for the user.

For example, the electronic device 100 may intelligently recognize content of the interaction object, and dynamically generate and display an intelligent menu option based on the content, to further complete a shortcut operation on the interaction object. This is convenient and efficient.

For another example, the electronic device 100 may further invoke, by using a natural language instruction (for example, a voice/text instruction) input by the user, a function of a corresponding menu option in original context or an application, and can complete a task by inputting only one natural language instruction without multi-level menu jump. This simplifies user operations, and improves human-computer interaction efficiency and user experience.

In embodiments of this application, the "intelligent menu application scenario" may be an application scenario in which by using the interaction method provided in embodiments of this application, the electronic device 100 may provide a more intelligent menu function for the user, so that a corresponding operation can be conveniently and quickly performed on the interaction object (for example, a text or a picture).

### 1. Intelligently recognize content of an interaction object, and dynamically generate and display an intelligent menu option based on the content

**FIG. 6A to FIG. 6C** **illustrate a group of user interfaces for performing a shortcut operation on an interaction object based on an intelligent menu option.**

A social application is used as an example. Refer to FIG. 6A. A user interface 610 shown in FIG. 6A may be a chat interface of the social application. The chat interface may include one or more chat records (for example, a chat record of a text 611 in a chat group named "XX department").

In this embodiment of this application, it is also assumed that the electronic device 100 has established a connection to the mouse, so that the pointer cursor 112 shown in FIG. 6A is a cursor of the mouse. For descriptions of the pointer cursor 112, refer to the foregoing related content. Details are not described herein again.

In this embodiment of this application, the user may trigger, by performing a specific operation on the mouse, the electronic device 100 to recognize content of the interaction object, and may further trigger the electronic device 100 to start a natural language interaction function, and generate and display the intelligent menu option based on the recognized content of the interaction object.

Still refer to FIG. 6A. It is assumed that the user wants to perform a corresponding operation on the text 611, so that the user may first move the pointer cursor 112 to a location of the text 611 (for example, a location of the pointer cursor 112 shown in FIG. 6A) by performing a drag operation on the mouse. Further, the electronic device 100 may detect a specific operation performed by the user on the mouse. In response to the specific operation, the electronic device 100 may recognize content of the text 611 (namely, the interaction object), and may start a natural language interaction function.

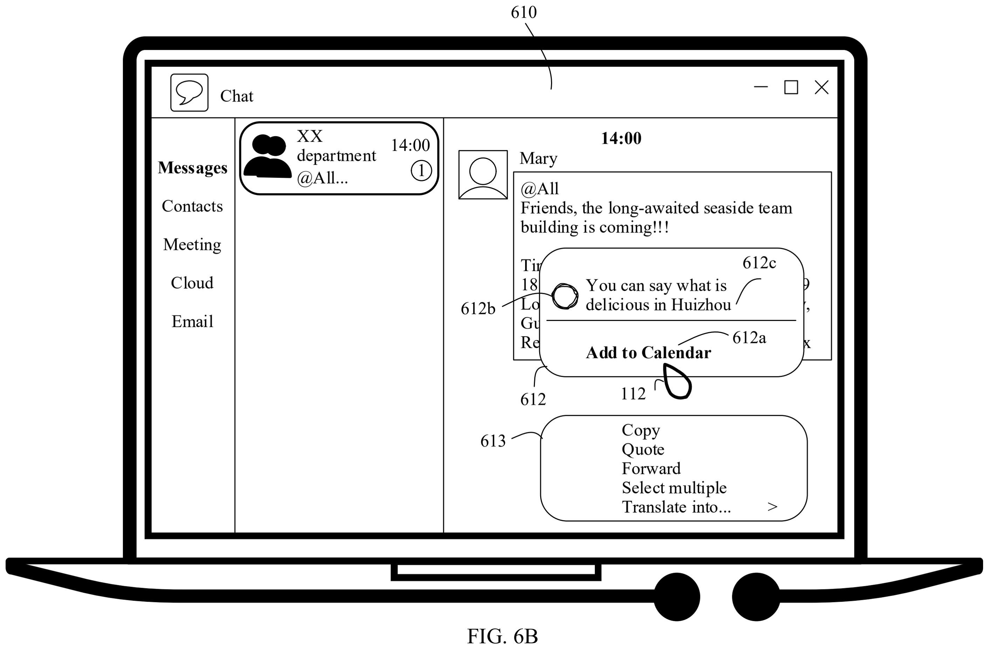

Refer to FIG. 6B. After starting the natural language interaction function, the electronic device 100 may display a natural language interaction entry 612. One or more menu options (for example, a menu option 612a) may be displayed on the natural language interaction entry 612. It is easy to understand that the one or more menu options may be generated by the electronic device 100 based on the content of the recognized text 611 (namely, the interaction object). For example, the content of the text 611 shown in FIG. 6A is content related to a schedule of the user, and the content includes information such as dates (for example, June 18 and June 19), an activity name (for example, seaside team building), and a location (for example, Shuangyue Bay, Huizhou City, Guangdong Province), so that the electronic device 100 may recognize that the text 611 includes the foregoing content related to the schedule of the user. Further, the electronic device 100 may generate a corresponding menu option based on the content, for example, a menu option (for example, the menu option 612a may be a menu option "Add to Calendar") related to schedule information (for example, information such as a date, an activity name, and a location).

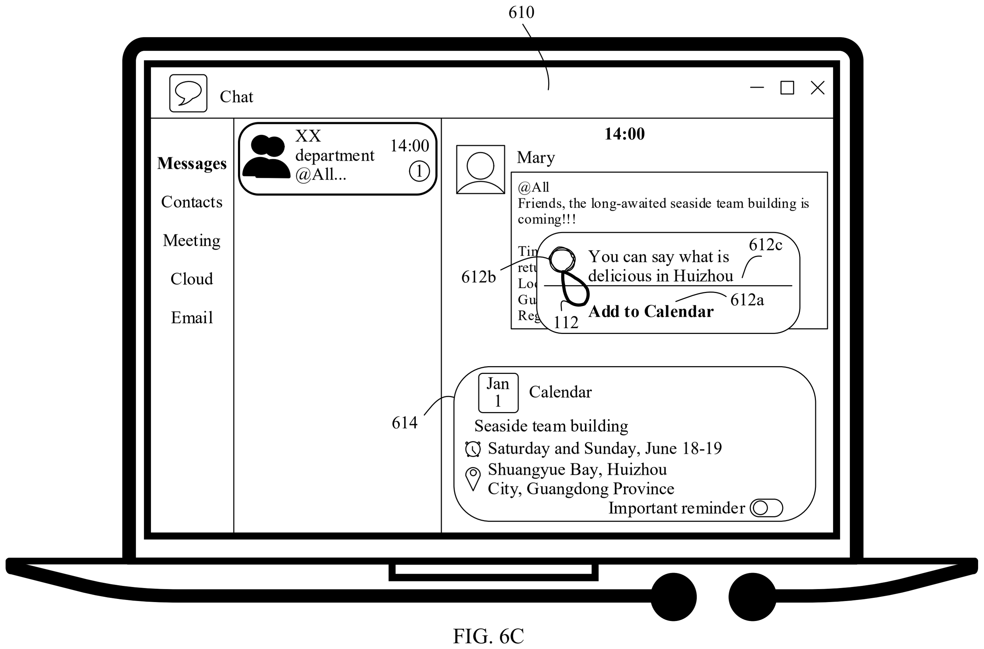

Still refer to FIG. 6B. It is assumed that the user wants to add the schedule information in the text 611 to Calendar, so that the electronic device 100 may detect an operation (for example, a click operation) performed by the user on the menu option 612a by using the mouse. In response to the operation, as shown in FIG. 6C, the electronic device 100 may add the schedule information (for example, information such as an activity name, time, and a location) in the text 611 to Calendar, and display a window 614. The window 614 may include the schedule information that has been added to Calendar, to inform the user that the electronic device 100 has successfully added the schedule information in the text 611 to Calendar. In this way, the user does not need to open the Calendar application to add the schedule information in the text 611. This is convenient, quick, and efficient, simplifies user operations, and improves user experience.

Still refer to FIG. 6B. Optionally, an indicator 612b may be displayed on the natural language interaction entry 612, and the indicator 612b may be used to inform the user that the electronic device 100 has started the natural language interaction function.

Still refer to FIG. 6B. Optionally, a prompt 612c may be displayed on the natural language interaction entry 612. The prompt 612c may be used to prompt the user to input a natural language instruction related to the interaction object. For example, if the interaction object is the text 611, the electronic device 100 may recognize that the text 611 includes information about a geographical location, and the prompt 612c may be a prompt (for example, "You can say what is delicious in Huizhou") prompting the user to input a natural language instruction related to the geographical location (for example, "Huizhou" in the text 611).

Optionally, the prompt 612c may alternatively be output in a form of voice broadcast.

Still refer to FIG. 6B. Optionally, the electronic device 100 may further display a menu bar 613. It is easy to understand that the menu bar 613 is an original menu bar provided by the social application for the chat record. The menu bar 613 may include one or more options (for example, a "Copy" option, a "Quote" option, a "Forward" option, a "Select multiple" option, and a "Translate into" option), and the one or more options may be used to perform corresponding operations on the text 611.

Still refer to FIG. 6C. The electronic device 100 may support the user in performing interaction (for example, question and answer query) by inputting a natural language instruction. The natural language instruction input by the user may be a voice instruction, or may be a text instruction. The voice instruction may be input by the user via a microphone on the electronic device 100, and the text instruction may be input by the user via a keyboard connected to the electronic device 100.

A triggering manner in which the electronic device 100 detects whether the user inputs a voice instruction or a text instruction is not limited in embodiments of this application.

In some embodiments, a triggering manner in which the electronic device 100 detects that the user inputs a voice instruction may be that the electronic device 100 starts the natural language interaction function (that is, after starting the natural language interaction function, the electronic device 100 starts to detect a voice instruction input by the user). In some other embodiments, a triggering manner in which the electronic device 100 detects that the user inputs a voice instruction may alternatively be that the electronic device 100 detects an operation (for example, a click operation) performed by the user on the indicator 612b (or the prompt 612c or any other location other than the location of the menu option 612a on the natural language interaction entry 612) shown in FIG. 6C by using the mouse.

In some embodiments, a trigger manner in which the electronic device 100 detects that the user inputs a text instruction may also be that the electronic device 100 detects an operation (for example, a click operation) performed by the user on the indicator 612b (or the prompt 612c or any other location other than the location of the menu option 612a on the natural language interaction entry 612) shown in FIG. 6C by using the mouse.

For example, as shown in FIG. 6D, the natural language instruction input by the user is a voice instruction. The electronic device 100 may detect a related voice instruction (for example, a voice "What is delicious in Huizhou") input by the user, and may display the detected and user-input related voice instruction (for example, a text 612d "What is delicious in Huizhou") in a form of a text.

Still refer to FIG. 6D. Optionally, after starting to detect the voice instruction input by the user, the electronic device 100 may replace the indicator 612b shown in FIG. 6C with an indicator 612e shown in FIG. 6D. The indicator 612e may be used to inform the user that the electronic device 100 is detecting the voice instruction input by the user.

Further, still refer to FIG. 6D. After input of the voice instruction is completed, the electronic device 100 may further analyze the voice instruction, to determine that an operation corresponding to the voice instruction is searching for delicious food in Huizhou.

Further, the electronic device 100 may search (for example, search on a cloud) for delicious food in Huizhou. After the search is completed, the electronic device 100 may display a search result 615. The search result 615 may include information (for example, text information and picture information) that is related to the delicious food in Huizhou and that is found by the electronic device 100. In this way, the user does not need to search, in another application, for information that the user wants to obtain. This is convenient, quick, and efficient, simplifies user operations, and improves user experience.

In some embodiments, still refer to FIG. 6E. After determining that input of the natural language instruction of the user is completed, the electronic device 100 may replace the indicator 612e shown in FIG. 6D with an indicator 612b shown in FIG. 6E for display. The indicator 612b may indicate that input of the natural language instruction of the user is completed.

In some embodiments, refer to FIG. 6F. The electronic device 100 may alternatively integrate the natural language interaction entry 612 and the menu bar 613 shown in FIG. 6B for display. In other words, in the intelligent menu application scenario, the electronic device 100 may integrate the natural language interaction entry and an original menu bar provided in an application for display.

It should be noted that the foregoing voice instruction "What is delicious in Huizhou" for performing the search operation is merely an example, and should not constitute a limitation on this application. It is easy to understand that the voice instruction for performing the content search operation needs to meet a specific condition. Under the condition, the electronic device 100 can determine an intention of the user to search for content. Meeting the "specific condition" may mean that the voice instruction includes some keywords (for example, "delicious food", "delicious", "what", "search", "Find", and "query") indicating content to be searched for and a search action.

### 2. Invoke a function of a corresponding menu option in original context or an application by using a natural language instruction (for example, a voice/text instruction) input by the user

By implementing the method provided in embodiments of this application, for a task that can be completed only by performing multi-level menu jump, the user completes the task only by inputting a natural language instruction. This simplifies user operations, and improves human-computer interaction efficiency and user experience.

It may be understood that there are many tasks that can be completed only by performing multi-level menu jump, for example, saving an object (for example, a picture, a video, or a document) to another storage path, or performing an editing operation on an object (for example, performing a parameter adjustment operation on a picture).

The following uses two application scenarios of saving a picture to another location and performing parameter adjustment on a picture as examples for description.

It is easy to understand that, not limited to the foregoing two application scenarios of multi-level menu jump, the interaction method provided in embodiments of this application may be further applied to another application scenario of multi-level menu jump. This is not limited in embodiments of this application.

### (1) Save a picture to another location

**FIG. 7A to FIG. 7D** **illustrate a group of user interfaces for saving a picture to another location.**

A social application is used as an example. Refer to FIG. 7A. A user interface 710 shown in FIG. 7A may be a chat interface of the social application. The chat interface may include one or more chat records (for example, a chat record of a picture 711 in a chat group named "XX department").

In this embodiment of this application, it is also assumed that the electronic device 100 has established a connection to the mouse, so that the pointer cursor 112 shown in FIG. 7A is a cursor of the mouse. For descriptions of the pointer cursor 112, refer to the foregoing related content. Details are not described herein again.

In this embodiment of this application, the user may trigger, by performing a specific operation on the mouse, the electronic device 100 to recognize content of the interaction object; may further trigger the electronic device 100 to start a natural language interaction function, to invoke, by using a natural language instruction (for example, a voice/text instruction) input by the user, a function of a corresponding menu option in original context or an application; and may further trigger the electronic device 100 to generate and display the intelligent menu option based on the recognized content of the interaction object.

Still refer to FIG. 7A. It is assumed that the user wants to perform a corresponding operation on the picture 711, so that the user may first move the pointer cursor 112 to a location of the picture 711 (for example, a location of the pointer cursor 112 shown in FIG. 7A) by performing a drag operation on the mouse. Further, the electronic device 100 may detect a specific operation performed by the user on the mouse. In response to the specific operation, the electronic device 100 may recognize content of the picture 711 (namely, the interaction object), and may start a natural language interaction function.

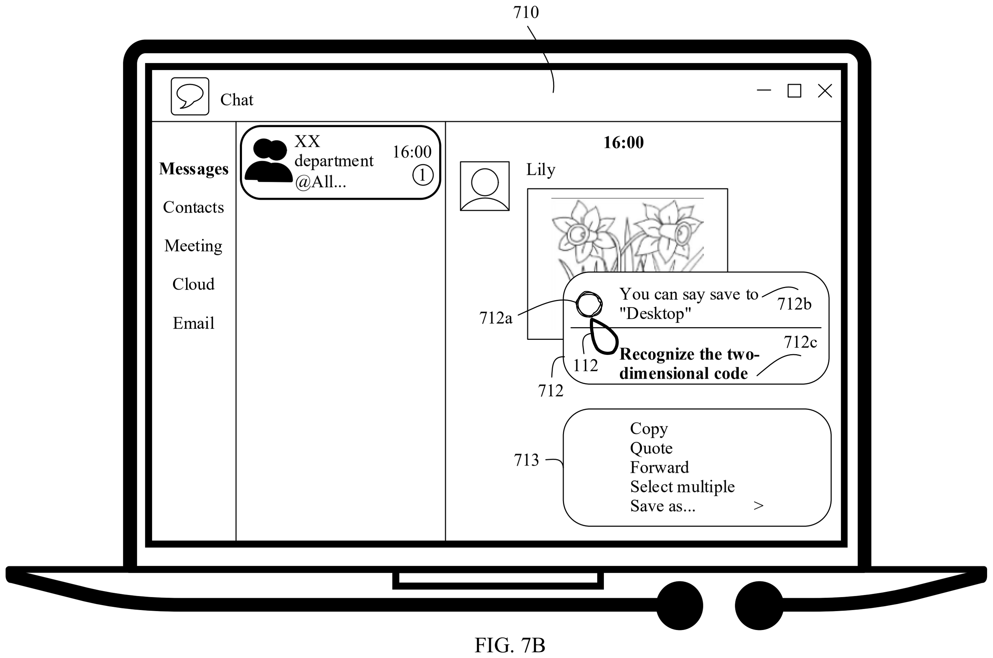

Refer to FIG. 7B. After starting the natural language interaction function, the electronic device 100 may display a natural language interaction entry 612.

Optionally, an indicator 712a may be displayed on the natural language interaction entry 612, and the indicator 712a may be used to inform the user that the electronic device 100 has started the natural language interaction function.

Optionally, a prompt 712b (for example, "You can say save to "Desktop"") may be displayed on the natural language interaction entry 612, and the prompt 712b may prompt the user to complete, by inputting a natural language instruction, the task that can be completed only by performing multi-level menu jump.

Optionally, the prompt 712b may alternatively be output in a form of voice broadcast.

Optionally, one or more menu options (for example, a menu option 712c) may be displayed on the natural language interaction entry 612. It is easy to understand that the one or more menu options may be generated by the electronic device 100 based on content of the recognized picture 711 (namely, the interaction object). For example, the picture 711 shown in FIG. 7A includes a two-dimensional code. In this case, the menu option generated by the electronic device 100 may be a menu option related to the two-dimensional code (for example, the menu option 712c may be a menu option "Recognize the two-dimensional code"). The user may trigger, by performing an operation (for example, a click operation) on the menu option 712c, the electronic device 100 to recognize the two-dimensional code in the picture 711.

Optionally, the electronic device 100 may display a menu bar 713. It is easy to understand that the menu bar 713 is an original menu bar provided by the social application for the chat record. The menu bar 713 may include one or more options (for example, a "Copy" option, a "Quote" option, a "Forward" option, a "Select multiple" option, and a "Save as" option), and the one or more options may be used to perform corresponding operations on the picture 711.

Still refer to FIG. 7B. The electronic device 100 may support the user in invoking, by inputting a natural language instruction, a function of a corresponding menu option in original context or an application, so that the task that can be completed only by performing multi-level menu jump can be completed by the user by inputting only one natural language instruction. The natural language instruction input by the user may be a voice instruction or a text instruction. The voice instruction may be input by the user via a microphone on the electronic device 100, and the text instruction may be input by the user via a keyboard connected to the electronic device 100.

A triggering manner in which the electronic device 100 detects whether the user inputs a voice instruction or a text instruction is not limited in embodiments of this application.

In some embodiments, a triggering manner in which the electronic device 100 detects that the user inputs a voice instruction may be that the electronic device 100 starts the natural language interaction function (that is, after starting the natural language interaction function, the electronic device 100 starts to detect a voice instruction input by the user). In some other embodiments, a triggering manner in which the electronic device 100 detects that the user inputs a voice instruction may alternatively be that the electronic device 100 detects an operation (for example, a click operation) performed by the user on the indicator 712a (or the prompt 712b or any other location other than the location of the menu option 712c on the natural language interaction entry 712) shown in FIG. 7B by using the mouse.

In some embodiments, a trigger manner in which the electronic device 100 detects that the user inputs a text instruction may also be that the electronic device 100 detects an operation (for example, a click operation) performed by the user on the indicator 712a (or the prompt 712b or any other location other than the location of the menu option 712c on the natural language interaction entry 712) shown in FIG. 7B by using the mouse.

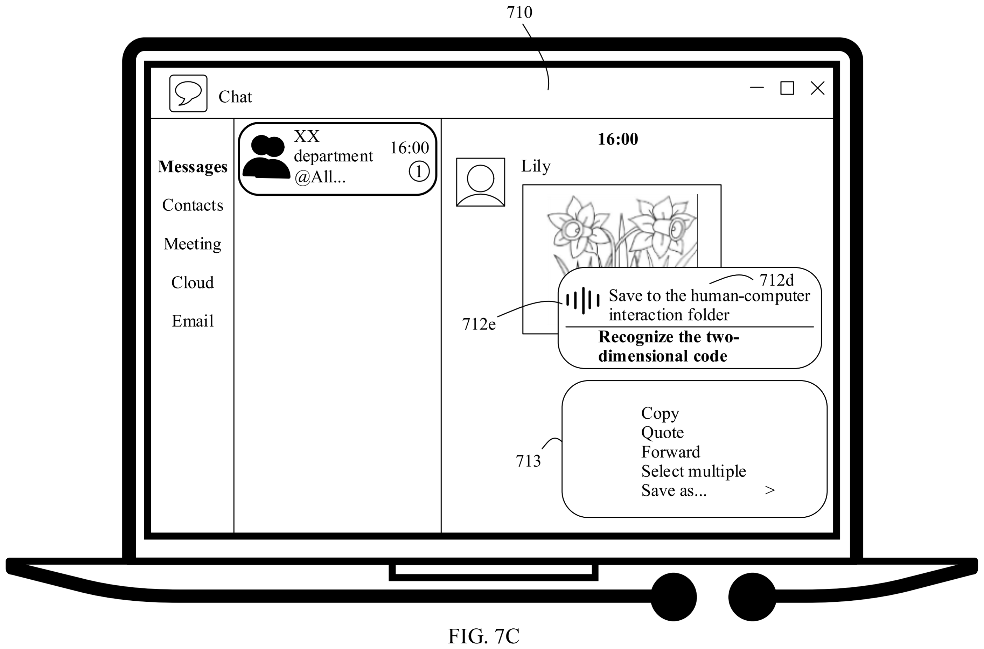

For example, as shown in FIG. 7C, the natural language instruction input by the user is a voice instruction. It is assumed that the user wants to save the picture 711 (namely, the interaction object) to a folder (for example, a human-computer interaction folder), so that the electronic device 100 may detect a related voice instruction (for example, a voice "Save to the human-computer interaction folder") input by the user, and may display the detected and user-input related voice instruction (for example, a text 712d "Save to the human-computer interaction folder") in a form of a text.

Still refer to FIG. 7C. Optionally, after starting to detect the voice instruction input by the user, the electronic device 100 may replace the indicator 712a shown in FIG. 7B with an indicator 712e shown in FIG. 7C. The indicator 712e may be used to inform the user that the electronic device 100 is detecting the voice instruction input by the user.

Further, still refer to FIG. 7C. After input of the voice instruction is completed, the electronic device 100 may further analyze the voice instruction, to determine that an operation corresponding to the voice instruction is saving the interaction object, namely, the picture 711, to the human-computer interaction folder.

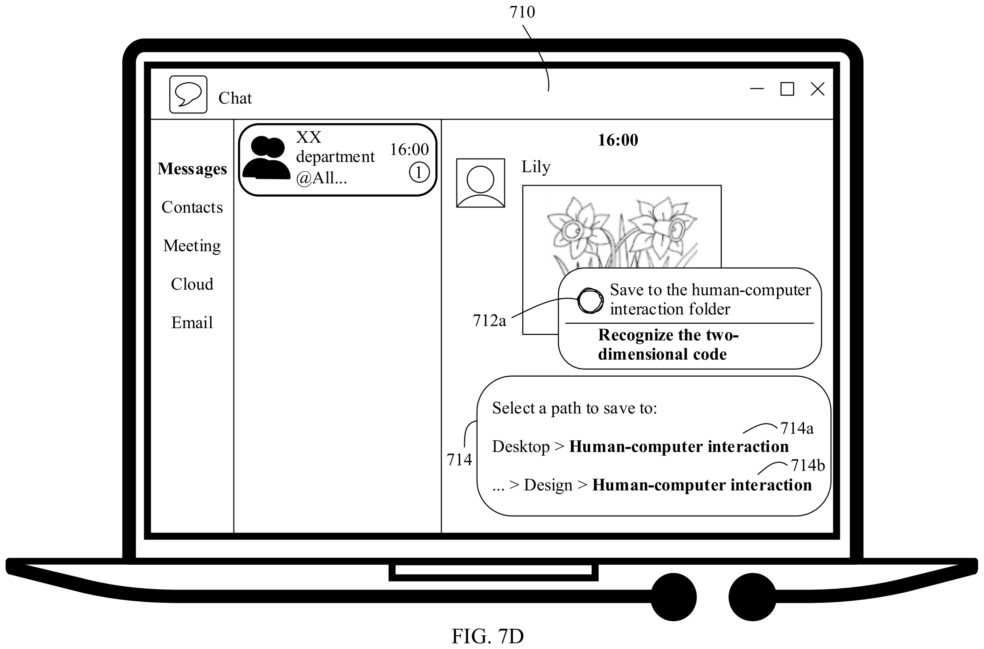

Further, the electronic device 100 may locally search for a storage path of a folder named "human-computer interaction". After the search is completed, as shown in FIG. 7D, the electronic device 100 may display a window 714. The window 714 may include one or more storage paths (for example, a storage path 714a and a storage path 714b) that are found by the electronic device 100 and that are of the folder named "human-computer interaction". Further, the electronic device 100 may support, by invoking a function of a menu option "Save as" provided by the social application, the user in selecting, by using a voice instruction or a click operation (for example, a click operation performed on the storage path 714a or the storage path 714b by using the mouse), to save the picture 711 to a human-computer interaction folder corresponding to a storage path.

For example, it is assumed that the user wants to save the picture 711 to the human-computer interaction folder corresponding to the storage path 714a, so that the electronic device 100 may detect a click operation on the storage path 714a. In response to the click operation, the electronic device 100 may directly save the picture 711 to the human-computer interaction folder corresponding to the storage path 714a. In this case, a picture save-as operation is completed. In this way, the user does not need to perform a plurality of operations such as first clicking the "Save as" option in the menu bar 713 shown in FIG. 7B and then manually searching for the human-computer interaction folder to complete a picture save-as task. This is convenient, quick, and efficient, simplifies user operations, and improves user experience.

In some embodiments, when the electronic device 100 has found only one storage path of the "human-computer interaction" folder, the electronic device 100 may not display the window 714 shown in FIG. 7D, but may directly save the picture 711 to the "human-computer interaction" folder corresponding to the storage path by invoking the function of the menu option "Save as" provided by the social application.

In some embodiments, still refer to FIG. 7D. After determining that input of the natural language instruction of the user is completed, the electronic device 100 may replace the indicator 712e shown in FIG. 7C with an indicator 712a shown in FIG. 7D for display. The indicator 712a may indicate that input of the natural language instruction of the user is completed.

It should be noted that the voice instruction "Save to the human-computer interaction folder" for performing the save-as operation is merely an example, and should not constitute a limitation on this application. It is easy to understand that the voice instruction for performing the save-as operation needs to meet a specific condition. Under the condition, the electronic device 100 can determine an intention of the user to perform the save-as operation. Meeting the "specific condition" may mean that the voice instruction includes some keywords (for example, "save", "save as", "folder", or "desktop") indicating a save-as action and a storage path.

### (2) Perform a parameter adjustment operation on a picture

**FIG. 8A to FIG. 8D** **illustrate a group of user interfaces for performing a parameter adjustment operation on a picture.**

An image processing application is used as an example. Refer to FIG. 8A. A user interface 810 shown in FIG. 8A may be a user interface of the image processing application. The user interface may include a to-be-processed picture 811.

In this embodiment of this application, it is also assumed that the electronic device 100 has established a connection to the mouse, so that the pointer cursor 112 shown in FIG. 8A is a cursor of the mouse. For descriptions of the pointer cursor 112, refer to the foregoing related content. Details are not described herein again.

In this embodiment of this application, the user may trigger, by performing a specific operation on the mouse, the electronic device 100 to recognize the interaction object, and may further trigger the electronic device 100 to start a natural language interaction function, to invoke, by using a natural language instruction (for example, a voice/text instruction) input by the user, a function of a corresponding menu option in original context or an application.

Still refer to FIG. 8A. It is assumed that the user wants to perform a corresponding operation on the picture 811, so that the user may first move the pointer cursor 112 to a location of the picture 811 (for example, a location of the pointer cursor 112 shown in FIG. 8A) by performing a drag operation on the mouse. Further, the electronic device 100 may detect a specific operation performed by the user on the mouse. In response to the specific operation, the electronic device 100 may recognize the picture 811 (namely, the interaction object), and may start a natural language interaction function.

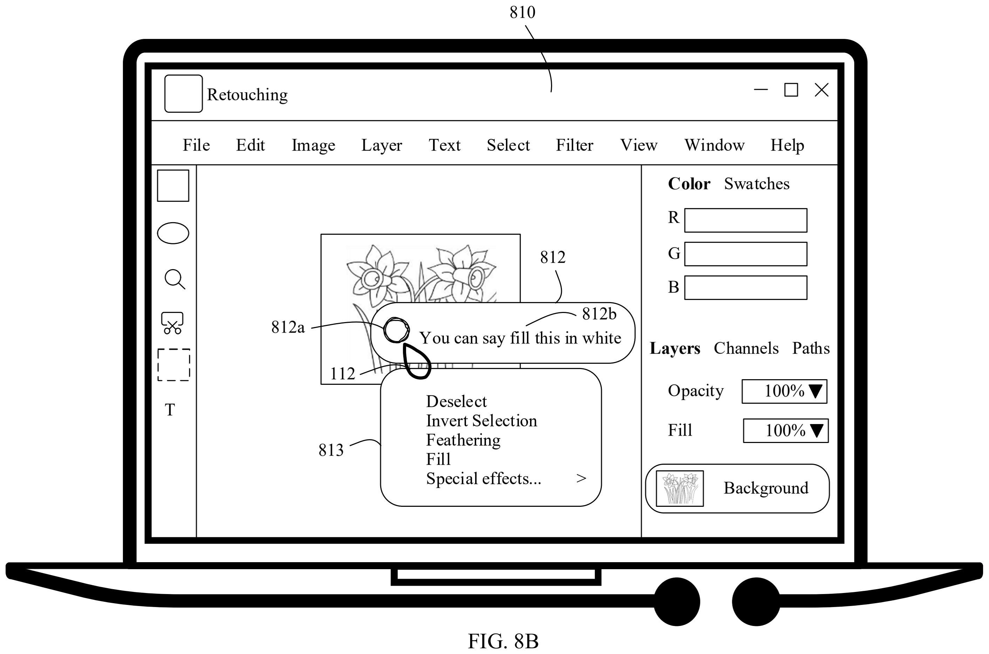

Refer to FIG. 8B. After starting the natural language interaction function, the electronic device 100 may display a natural language interaction entry 812.

Optionally, an indicator 812a may be displayed on the natural language interaction entry 812, and the indicator 812a may be used to inform the user that the electronic device 100 has started the natural language interaction function.

Optionally, a prompt 812b (for example, "You can say fill this in white") may be displayed on the natural language interaction entry 812, and the prompt 812b may prompt the user to complete, by inputting a natural language instruction, the task that can be completed only by performing multi-level menu jump.

Optionally, the prompt 812b may alternatively be output in a form of voice broadcast.

Optionally, the electronic device 100 may display a menu bar 813. It is easy to understand that the menu bar 813 is an original menu bar provided by the image processing application for the to-be-processed picture. The menu bar 813 may include one or more options (for example, a "Deselect" option, an "Invert Selection" option, a "Feathering" option, a "Fill" option, and a "Special effects" option), and the one or more options may be used to perform corresponding operations on the picture 811.

Still refer to FIG. 8B. The electronic device 100 may support the user in invoking, by inputting a natural language instruction, a function of a corresponding menu option in original context or an application, so that the task that can be completed only by performing multi-level menu jump can be completed by the user by inputting only one natural language instruction. The natural language instruction input by the user may be a voice instruction or a text instruction. The voice instruction may be input by the user via a microphone on the electronic device 100, and the text instruction may be input by the user via a keyboard connected to the electronic device 100.

A triggering manner in which the electronic device 100 detects whether the user inputs a voice instruction or a text instruction is not limited in embodiments of this application.

In some embodiments, a triggering manner in which the electronic device 100 detects that the user inputs a voice instruction may be that the electronic device 100 starts the natural language interaction function (that is, after starting the natural language interaction function, the electronic device 100 starts to detect a voice instruction input by the user). In some other embodiments, a triggering manner in which the electronic device 100 detects that the user inputs a voice instruction may alternatively be that the electronic device 100 detects an operation (for example, a click operation) performed by the user on the indicator 812a (or the prompt 812b or any other location on the natural language interaction entry 812) shown in FIG. 8B by using the mouse.

In some embodiments, a trigger manner in which the electronic device 100 detects that the user inputs a text instruction may also be that the electronic device 100 detects an operation (for example, a click operation) performed by the user on the indicator 812a (or the prompt 812b or any other location on the natural language interaction entry 812) shown in FIG. 8B by using the mouse.

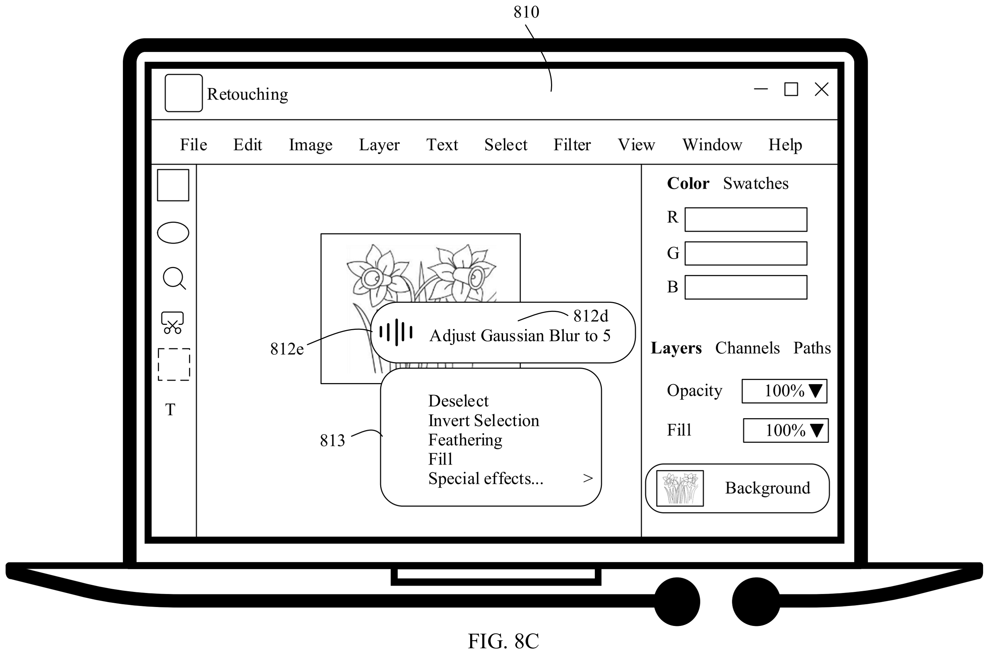

For example, as shown in FIG. 8C, the natural language instruction input by the user is a voice instruction. It is assumed that the user wants to adjust a Gaussian blur radius parameter of the picture 811, for example, adjust a value of the Gaussian blur radius to 5, so that the electronic device 100 may detect a related voice instruction (for example, a voice "Adjust Gaussian Blur to 5") input by the user, and may display the detected and user-input related voice instruction (for example, a text 812d "Adjust Gaussian Blur to 5") in a form of a text.

Still refer to FIG. 8C. Optionally, after starting to detect the voice instruction input by the user, the electronic device 100 may replace the indicator 812a shown in FIG. 8B with an indicator 812e shown in FIG. 8C. The indicator 812e may be used to inform the user that the electronic device 100 is detecting the voice instruction input by the user.

Further, still refer to FIG. 8C. After input of the voice instruction is completed, the electronic device 100 may further analyze the voice instruction, to determine that an operation corresponding to the voice instruction is adjusting the value of the Gaussian blur radius of the picture 811 to 5.

Further, the electronic device 100 may invoke a function of a menu option "Gaussian Blur" provided by the image processing application, to automatically adjust the value of the Gaussian blur radius of the picture 811 in FIG. 8A to 5, and may update and display, in FIG. 8A, the picture 811 whose Gaussian blur radius value is automatically adjusted to 5. In this case, the operation of adjusting the parameter of the Gaussian blur radius of the picture is completed. In this way, the user does not need to first enter a second-level menu bar or a third-level menu bar to search for the menu option Gaussian Blur, and then click the menu option to enter a Gaussian Blur setting interface to perform a plurality of operations to complete a task of adjusting the parameter of the Gaussian blur radius. This is convenient, quick, and efficient, and simplifies user operations, and improves user experience.

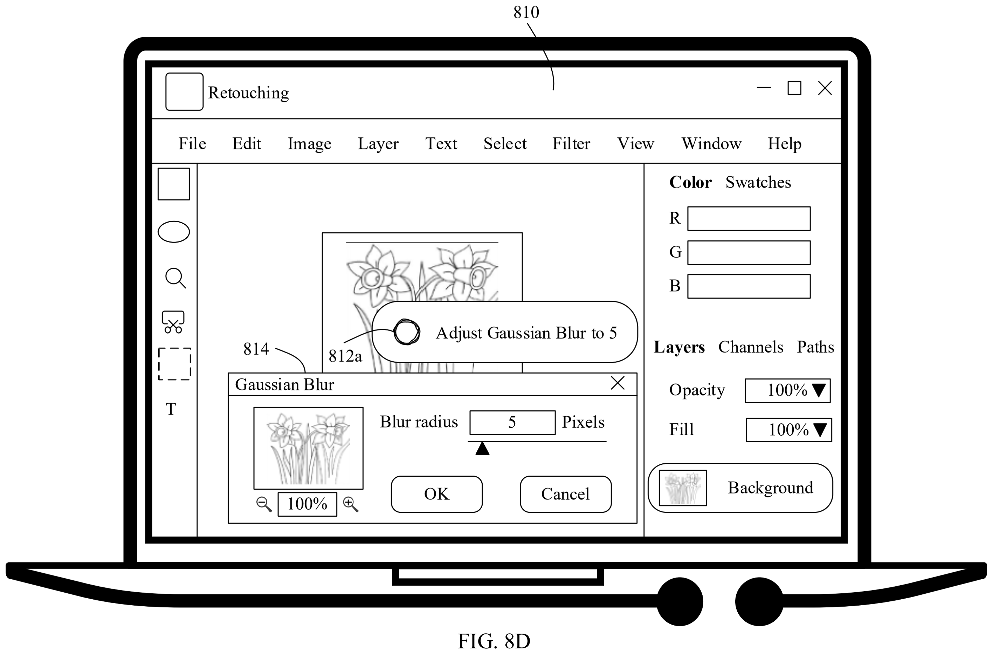

Optionally, still refer to FIG. 8D. To provide more space for the user to make an independent choice, before the electronic device 100 updates and displays, in FIG. 8A, the picture 811 whose Gaussian blur radius value is automatically adjusted to 5, the electronic device 100 may further display a window 814. The window 814 may be used by the user to preview the picture 811 whose Gaussian blur radius value is automatically adjusted to 5, and may be further used by the user to manually adjust the Gaussian blur radius value of the picture 811 again. The window 814 may further include an "OK" option and a "Cancel" option. If the electronic device 100 detects an operation performed by the user on the "OK" option, the electronic device 100 may update and display, in FIG. 8A, the picture 811 whose Gaussian blur radius value is automatically adjusted to 5. If the electronic device 100 detects an operation performed by the user on the "Cancel" option, the electronic device 100 does not adjust the Gaussian blur radius value of the picture 811, and does not update and display the picture 811 in FIG. 8A.

In some embodiments, still refer to FIG. 8D. After determining that input of the natural language instruction of the user is completed, the electronic device 100 may replace the indicator 812e shown in FIG. 8C with an indicator 812a shown in FIG. 8D for display. The indicator 812a may indicate that input of the natural language instruction of the user is completed.

It should be noted that the voice instruction "Adjust Gaussian Blur to 5" for performing the picture parameter adjustment operation is merely an example, and should not constitute a limitation on this application. It is easy to understand that the voice instruction for performing the picture parameter adjustment operation needs to meet a specific condition. Under the condition, the electronic device 100 can determine an intention of the user to perform the picture parameter adjustment operation. Meeting the "specific condition" may mean that the voice instruction includes some keywords (for example, "Gaussian blur" and "adjust") indicating a type of a parameter to be adjusted, a parameter adjustment action, and a value corresponding to the parameter type.

**FIG. 9** **illustrates a specific process of the interaction method in the intelligent dialog box application scenario according to an embodiment of this application.**

As shown in FIG. 9, the method may be applied to the electronic device 100. The following describes in detail specific steps of the method.

S901: The electronic device 100 detects a specific operation performed by a user on a device (for example, a mouse or a touchpad) having a cursor attribute, and the electronic device 100 starts a natural language interaction function in response to the specific operation.

Specifically, for example, the electronic device 100 is a PC. The electronic device 100 may establish a connection to the device (for example, the mouse or the touchpad) having the cursor attribute in a wired or wireless manner. It is assumed that the electronic device 100 establishes a connection to the mouse. After the connection is established, the electronic device 100 may detect a specific operation performed by the user on the mouse, and the electronic device 100 may start the natural language interaction function in response to the specific operation.

The specific operation on the mouse may include but is not limited to any one of the following operations: a press and hold operation for a left button on the mouse, a press and hold operation for a right button on the mouse, a press and hold operation for both the left button and the right button on the mouse, a press and hold operation or a click operation for another physical button other than the left button and the right button on the mouse, or the like.

After starting the natural language interaction function, the electronic device 100 may display a natural language interaction entry, so that the electronic device 100 can subsequently detect, by using the natural language interaction function, a natural language instruction (for example, a voice instruction or a text instruction) input by the user, and may display the natural language instruction on the natural language interaction entry.

After establishing the connection to the mouse, the electronic device 100 may display a cursor of the mouse. The natural language interaction entry may be formed by deforming the cursor and displayed at a location of the cursor before the deformation, or may not be formed by deforming the cursor and may be independently displayed near a location of the cursor.

The specific operation may further trigger the electronic device 100 to select an interaction object, so that the electronic device 100 can subsequently perform a corresponding operation on the interaction object based on the input natural language instruction.

For a specific process of triggering the electronic device 100 to start the natural language interaction function, display the natural language interaction entry, and select the interaction object by using the specific operation, refer to the related text descriptions in the foregoing user interface embodiments. Details are not described herein again.

S902: The electronic device 100 detects that the user inputs a natural language instruction, and determines an interaction object based on the natural language instruction and the location of the cursor.

Specifically, after starting the natural language interaction function, the electronic device 100 may detect, by using the natural language interaction function, the natural language instruction input by the user. After input of the natural language instruction is completed, the electronic device 100 may determine whether the natural language instruction includes a default object (in other words, the natural language instruction does not include the interaction object) or a reference pronoun (to be specific, the natural language instruction includes a word used to specify the interaction object, for example, "this" or "it"). If yes (to be specific, the natural language instruction does not include a keyword indicating the interaction object), the electronic device 100 may extract and recognize the interaction object from interface content at the location of the cursor (namely, the location of the cursor when the user performs the specific operation on the mouse) or at and near the location of the cursor, to determine the interaction object. If no (to be specific, the natural language instruction includes the keyword indicating the interaction object), the electronic device 100 may perform Step S903.

In some embodiments, when the natural language instruction does not include the default object (in other words, the natural language instruction includes the interaction object), the electronic device 100 may perform a corresponding operation on the interaction object based on the interaction object included in the natural language instruction.

For example, it is assumed that the natural language instruction is "Open the PPT document that I edited yesterday". It can be learned that an interaction object included in the natural language instruction is "the PPT document edited yesterday". In this case, the electronic device 100 may locally search for and open the PPT document edited by the user yesterday.

In some other embodiments, when the interaction object included in the natural language instruction is different from the interaction object selected by triggering, by using the specific operation, the electronic device 100, the electronic device 100 may perform a corresponding operation on the interaction object based on the interaction object included in the natural language instruction.

For example, it is assumed that the natural language instruction is "brighten the picture a little". It can be learned that the interaction object included in the natural language instruction is "picture". However, the interaction object selected by triggering, by using the specific operation, the electronic device 100 is a part of the picture (for example, the left flower 111a in the picture 111 shown in FIG. 1A). In this case, the electronic device 100 may increase overall brightness of the picture by using a related algorithm, instead of increasing only brightness of the part of the picture. In other words, the interaction object determined by the electronic device 100 is the entire picture, instead of the part of the picture.

In some other embodiments, when the natural language instruction includes the default object or the reference pronoun, the electronic device 100 may preferentially use, as the interaction object, a minimum unit object (for example, a control, a cutout subject, or a text word segmentation) that can be recognized at the location of the cursor, and then the electronic device 100 may determine, based on the natural language instruction, whether to extend a range of the interaction object. If yes, the electronic device may extend the range of the interaction object to determine a new interaction object, and perform an operation corresponding to the natural language instruction on the new interaction object.

For example, it is assumed that the natural language instruction is "erase". It can be learned that the natural language instruction includes the default object. In this case, the electronic device 100 may use, as the interaction object, the minimum unit object that can be recognized at the location of the cursor, for example, use a part of a picture as the interaction object. Further, the electronic device 100 may erase the part of the picture from the picture by using a related algorithm.

For example, it is assumed that the natural language instruction is "erase this". It can be learned that the natural language instruction includes the reference pronoun "this". In this case, the electronic device 100 may use, as the interaction object, the minimum unit object that can be recognized at the location of the cursor, for example, use a part of a picture as the interaction object. Further, the electronic device 100 may erase the part of the picture from the picture by using a related algorithm.

For example, it is assumed that the natural language instruction is "copy this paragraph to Notes". It can be learned that the natural language instruction includes the reference pronoun "this paragraph". It is assumed that the interaction object selected by triggering, by using the specific operation, the electronic device 100 is a part of text (namely, a selected text) in a text paragraph, so that the electronic device 100 may determine, based on "this paragraph" in the natural language instruction, to extend a range of the interaction object. Further, the electronic device 100 may recognize context of the selected text by using a related algorithm (for example, a text detection and recognition algorithm like OCR), to obtain the entire text paragraph at which the selected text is located. Further, the electronic device 100 may determine that a new interaction object is the entire text paragraph at which the selected text is located, and may copy, to Notes, the entire text paragraph at which the selected text is located.

S903: The electronic device 100 responds to the natural language instruction based on the interaction object.

Specifically, after determining the interaction object, the electronic device 100 may analyze and understand the natural language instruction input by the user based on the interaction object. After analysis and understanding, the electronic device 100 may respond to the natural language instruction, to be specific, perform the operation corresponding to the natural language instruction on the interaction object. For example, a corresponding operation (for example, an operation such as sharing, collecting, copying, or editing) is performed on the picture. For another example, a corresponding operation (for example, an operation such as sharing, collecting, content summarization, searching, opening, or editing) is performed on the document.

For a specific process in which the electronic device 100 responds to the natural language instruction input by the user, refer to the related text descriptions in the foregoing user interface embodiments. Details are not described herein again.

By implementing the interaction method provided in embodiments shown in FIG. 9, when the electronic device 100 successfully establishes a connection to the device (for example, the mouse or the touchpad) having the cursor attribute, the electronic device 100 may support the user in starting the natural language interaction function of the electronic device 100 by performing the specific operation on the device having the cursor attribute, and display the natural language interaction entry at or near the location of the cursor. Further, the electronic device 100 may detect a voice/text instruction input by the user by using natural language, and display the instruction on the natural language interaction entry. After input of the instruction is completed, the electronic device 100 may substitute the interaction object into the input instruction for understanding and execution. The interaction object may be determined by the electronic device 100 by extracting and recognizing interface content at a location of the cursor or at and near the location of the cursor. In this way, the interaction object is more clearly indicated, and a problem that it is inconvenient to express the interaction object by using the natural language can be resolved. In addition, the natural language interaction function may be triggered at or near the location of the cursor, so that an operation corresponding to a natural language instruction may be further performed based on the interaction object, and the natural language instruction can be directly input without moving the cursor over a long distance to a fixed natural language interaction entry. This is convenient and quick. In addition, the natural language interaction function can be triggered without adding an additional physical button to the device having the cursor attribute, to reduce development costs.

**FIG. 10** **illustrates a specific process of the interaction method in the intelligent menu application scenario according to an embodiment of this application.**

As shown in FIG. 10, the method may be applied to the electronic device 100. The following describes in detail specific steps of the method.

S1001: The electronic device 100 detects a specific operation performed by a user on a device (for example, a mouse or a touchpad) having a cursor attribute, and the electronic device 100 starts a natural language interaction function in response to the specific operation.

For a specific execution process of step S1001, refer to the related text description of step S901 in FIG. 9. Details are not described herein again.

S1002: The electronic device 100 determines an interaction object based on a location of a cursor, recognizes content of the interaction object, and dynamically generates and displays an intelligent menu option based on the content.

Specifically, in response to the specific operation, the electronic device 100 may extract and recognize the interaction object from interface content at the location of the cursor (namely, the location of the cursor when the user performs the specific operation) or interface content at and near the location of the cursor, to determine the interaction object. After the interaction object is determined, the electronic device 100 may recognize the content of the interaction object by using a related algorithm (for example, a computer vision algorithm or a service recommendation algorithm), and dynamically generate and display an intelligent menu option (for example, the menu option 612a shown in FIG. 6B and the menu option 712c shown in FIG. 7B) based on the content.

In this embodiment of this application, after starting the natural language interaction function, the electronic device 100 may also display a natural language interaction entry, and the foregoing intelligent menu option may be displayed on the natural language interaction entry.

S1003: The electronic device 100 detects that the user inputs a natural language instruction, and responds to the natural language instruction based on the interaction object; or the electronic device 100 detects an operation performed by the user on the intelligent menu option, and responds to the operation.

In this embodiment of this application, the electronic device 100 may support the user in performing a shortcut operation on the interaction object by inputting a natural language instruction to invoke a function of a corresponding menu option in original context or an application, and may also support the user in performing a shortcut operation on the interaction object by performing an operation on the intelligent menu option (namely, a menu option associated with content of the interaction object).

For example, that the electronic device 100 detects that the user inputs the natural language instruction, and responds to the natural language instruction based on the interaction object may be specifically that the electronic device 100 detects that the natural language instruction input by the user includes a keyword (for example, "save as", "save", or "Gaussian blur") instructing the electronic device 100 to invoke the function of the corresponding menu option in the original context or the application. In this case, the electronic device 100 may invoke the function of the menu option indicated by the natural language instruction, and perform the corresponding operation (for example, a save-as operation or a parameter adjustment operation) on the interaction object based on the function of the menu option. In this way, a task can be completed by inputting only one natural language instruction by the user without multi-level menu jump. This simplifies user operations, and improves human-computer interaction efficiency and user experience.

For example, that the electronic device 100 detects the operation performed by the user on the intelligent menu option, and responds to the operation may be specifically that the electronic device 100 detects a click operation performed by the user on the intelligent menu option, and in response to the operation, the electronic device 100 may perform a shortcut operation on the interaction object based on the function of the intelligent menu option. For example, if the content of the interaction object includes content related to the schedule of the user, the intelligent menu option may be, for example, a menu option "Add to Calendar". In this way, the user does not need to start a calendar application to add the schedule information in the text 611. This is convenient and quick. For another example, if the content of the interaction object includes a two-dimensional code, the intelligent menu option may be, for example, a menu option "Recognize the two-dimensional code". In this way, the user does not need to search for the menu option Recognize the two-dimensional code provided by a current application or another application, and can quickly complete two-dimensional code recognition by clicking the currently displayed menu option "Recognize the two-dimensional code". This is convenient and quick.

It is easy to understand that the foregoing intelligent menu options merely use "Add to Calendar" and "Recognize the two-dimensional code" as examples, and are not limited thereto. There may be more other menu options. This is not limited in embodiments of this application.

For a specific execution process of step S1003, refer to related text descriptions in the foregoing user interface embodiments. Details are not described herein again.

By implementing the interaction method provided in embodiments shown in FIG. 10, when the electronic device 100 successfully establishes a connection to the device (for example, the mouse or the touchpad) having the cursor attribute, the electronic device 100 may support the user in starting the natural language interaction function of the electronic device 100 by performing the specific operation on the device having the cursor attribute. The electronic device 100 may further determine the interaction object based on the location of the cursor, recognize the content of the interaction object, and dynamically generate and display the intelligent menu option based on the content, to further complete a shortcut operation on the interaction object. In this way, a current problem that a menu function is fixed and undiversified and can be set only based on a type of the interaction object can be resolved. The electronic device 100 may further invoke, by using the natural language instruction (for example, a voice/text instruction) input by the user, the function of the corresponding menu option in the original context or the application. This resolves a problem that the user needs to complete a complex function by navigating through a multi-level menu, and enabling direct access with no hierarchical jumps required. The user only needs to input a natural language instruction to complete the function. This simplifies user operations, and improves human-computer interaction efficiency and user experience.

The following describes a software structure of the electronic device 100 according to embodiments of this application.

**FIG. 11** **illustrates a software structure of the electronic device 100 according to an embodiment of this application.**

As shown in FIG. 11, a software system of the electronic device 100 may use a layered architecture, an event-driven architecture, a microkernel architecture, a microservice architecture, or a cloud architecture. In embodiments of this application, a system of the layered architecture is used as an example to describe the software structure of the electronic device 100.

In the layered architecture, software is divided into several layers, and each layer has a clear role and task. The layers communicate with each other through a software interface. In some embodiments, the system may be divided into four layers from top to bottom: an application layer, an application framework layer, a system library, and a kernel layer.

The application layer may include a series of application packages.

As shown in FIG. 11, the application packages may include applications such as Camera, Gallery, Calendar, Input method, Maps, **Voice assistant**, WLAN, Bluetooth, Music, Videos, Email, and Notes (not shown in the figure).

**The voice assistant may be an application having a voice/text instruction recognition function. For example, after detecting voice input of a user, the voice assistant may recognize an intention of the user by using a voice recognition technology, a natural language processing technology, and the like, and make a response accordingly (for example, perform voice answering, start an application, or change a device configuration). The electronic device 100 may always keep the voice assistant started, or may start the voice assistant after detecting a user operation (for example, a press and hold operation on an interface element/button), or may start the voice assistant after detecting a wakeup word. This is not limited herein.**

**The voice/text instruction may be a voice/text for controlling the electronic device 100 to perform one or more operations.**

**It should be noted that a name of the voice assistant application is merely a word used in embodiments of this application, and a meaning represented by the voice assistant application has been recorded in embodiments of this application. The name of the voice assistant application does not constitute any limitation on embodiments of this application.**

**In embodiments of this application, the electronic device 100 may establish a connection to a device (for example, a mouse or a touchpad) having a cursor attribute. After the connection is established, a specific operation (for example, a press and hold operation on a left button and/or a right button on the mouse) performed by the user on the device having the cursor attribute may trigger the electronic device 100 to start a natural language interaction function, so that the electronic device 100 can subsequently detect, by using the natural language interaction function, a natural language instruction (for example, a voice instruction or a text instruction) input by the user. In addition, the specific operation may further trigger the electronic device 100 to select an interaction object, so that a corresponding operation may be performed on the interaction object based on the natural language instruction input by the user. The specific operation may further trigger the electronic device 100 to recognize content of the interaction object, and to dynamically generate and display an intelligent menu option based on the content, so that a shortcut operation on the interaction object can be further completed. For details, refer to the related text descriptions in the foregoing embodiments. Details are not described herein again.**

**In embodiments of this application, the electronic device 100 may invoke, by using the natural language instruction input by the user, a function provided by an application in which the interaction object is located, to perform a corresponding operation on the interaction object.**

**In embodiments of this application, the natural language interaction function started by the electronic device 100 may be a system capability provided by the electronic device 100. In some embodiments, the system capability may be implemented based on the voice assistant application or the input method application.**

The application framework layer provides an application programming interface (application programming interface, API) and a programming framework for an application at the application layer. The application framework layer includes some predefined functions.

As shown in FIG. 11, the application framework layer may include a window manager, a content provider, a view system, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, a browsing history, a bookmark, and the like.

The view system includes a visual control, for example, a control for displaying a text or a control for displaying a picture. The view system may be configured to construct an application. A display interface may include one or more views. For example, a display interface may include a text display view and an image display view.

The resource manager provides, for an application, various resources such as a localized character string, an icon, an image, a layout file, and a video file.

The notification manager enables an application to display notification information in a status bar, and may be configured to transmit a notification-type message. The displayed information may automatically disappear after a short pause without user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

A core library includes two parts: One part is a performance function that needs to be invoked by the Java language, and the other part is an Android core library.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to: manage a display subsystem and provide fusion of two-dimensional and three-dimensional layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The two-dimensional graphics engine is a drawing engine for two-dimensional drawing.

The kernel layer is a layer between hardware and software. The kernel layer includes at least a display driver, a camera driver, a Bluetooth driver, and a sensor driver.

The following describes a structure of the electronic device 100 according to embodiments of this application.

**FIG. 12** **illustrates a structure of the electronic device 100 according to an embodiment of this application.**

As shown in FIG. 12, the electronic device 100 may include a processor 110, an internal memory 120, an interface 121 for external memory, a universal serial bus (universal serial bus, USB) interface 130, a charging management module 140, a power management module 141, a battery 142, a display 151, a mouse 152, a camera 153, an audio module 160, a speaker 161, a receiver 162, a microphone 163, a headset jack 164, a wired communication module 171, a wireless communication module 172, an antenna 1, a sensor module 180, and the like. The sensor module 180 may include a pressure sensor 180A, a fingerprint sensor 180B, a temperature sensor 180C, a touch sensor 180D, an ambient light sensor 180E, and the like.

It can be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware. For example, in some embodiments, in addition to the foregoing hardware, the electronic device 100 may further include a motor, a mobile communication module (2G/3G/4G/5G), a SIM card interface, an eSIM chip, and the like. Therefore, the specific hardware structure of the electronic device 100 may include more or fewer components than those shown in the figure, or some components may be combined, or some components may be split, or there may be a different component arrangement.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thus improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to exchange data between the electronic device 100 and a peripheral device. The interface may be further configured to connect to another electronic device like an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The internal memory 120 may be configured to store computer-executable program code, and the executable program code includes instructions. The processor 110 runs the instructions stored in the internal memory 120, to perform various function applications of the electronic device 100 and data processing. The internal memory 120 may include a program storage area and a data storage area. The program storage area may store an operating system, an application required by at least one function (for example, a voice playing function or an image playing function), and the like. The data storage area may store data created in a process of using the electronic device 100, and the like. In addition, the internal memory 120 may include a high-speed random access memory, and may further include a nonvolatile memory, for example, at least one magnetic disk storage device, a flash memory device, or a universal flash storage (universal flash storage, UFS).

The interface 121 for external memory may be configured to connect to an external memory card, for example, a removable hard disk, to extend a storage capability of the electronic device 100. The external memory card communicates with the processor 110 through the interface 121 for external memory, to implement a data storage function. For example, files such as music and videos are stored in an external storage hard disk.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, and supplies power to the processor 110, the internal memory 120, the external memory, the display 151, the camera 153, the wireless communication module 172, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

The electronic device 100 may implement a display function by using the GPU, the display 151, the application processor, and the like. The GPU is a microprocessor for image processing, and is connected to the display 151 and the application processor. The GPU is configured to: perform mathematical and geometric computation, and render an image. The processor 110 may include one or more GPUs, which execute program instructions to generate or change display information.

The display 151 is configured to display an image, a video, or the like. The display 151 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 151, where N is a positive integer greater than 1.

**The mouse 152 may be configured to receive an operation of a user, to control the electronic device 100, so that the electronic device 100 implements different functions. For example, the user may trigger, by performing a specific operation on the mouse, the electronic device 100 to select an interaction object, and may further trigger the electronic device 100 to start a natural language interaction function, so that the electronic device 100 further performs a corresponding operation on the interaction object based on the natural language interaction function, and the like. The electronic device 100 is not limited to the mouse 152, namely, a device having a cursor attribute, and may be another device having the cursor attribute (for example, a touchpad), to control the electronic device 100.**

The electronic device 100 may implement an image shooting function through the ISP, the camera 153, the video codec, the GPU, the display 151, the application processor, and the like.

The camera 153 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 153, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100, for example, image recognition, facial recognition, voice recognition, and text understanding, can be implemented by using the NPU.

A network communication function of the electronic device 100 may be implemented through the wired communication module 171, the wireless communication module 172, the antenna 1, the modem processor, the baseband processor, and the like. By using the network communication function of the electronic device 100, the electronic device 100 may communicate with another electronic device.

The antenna 1 is configured to transmit and receive electromagnetic wave signals. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 161, the receiver 162, or the like), or displays an image or a video on the display 151. In some embodiments, the modem processor may be an independent component.

The wired communication module 171 may provide a wired communication solution that is applied to the electronic device 100 and that includes Ethernet, a local area network, the internet, or the like. The wired communication module 171 may be one or more components integrated into at least one communication processor module.

The wireless communication module 172 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 172 may be one or more components integrated into at least one communication processor module. The wireless communication module 172 receives an electromagnetic wave through the antenna 1, performs frequency modulation and filtering processing on the electromagnetic wave signal, and sends a processed signal to the processor 110. The wireless communication module 172 may further receive a to-be-sent signal from the processor 110, perform frequency modulation and amplification on the signal, and convert the signal into an electromagnetic wave for radiation through the antenna 1.

The electronic device 100 may implement an audio function, for example, music playing and recording, through the audio module 160, the speaker 161, the receiver 162, the microphone 163, the headset jack 164, the application processor, and the like.

The audio module 160 is configured to convert digital audio information into an analog audio signal for output, and is further configured to convert an analog audio input into a digital audio signal. The audio module 160 may be further configured to: encode and decode audio signals. In some embodiments, the audio module 160 may be disposed in the processor 110, or some functional modules in the audio module 160 are disposed in the processor 110.

The speaker 161, also referred to as a "loudspeaker", is configured to convert an electrical audio signal into a sound signal. The electronic device 100 may be configured to listen to music or answer a call in a hands-free mode over the speaker 161.

The receiver 162, also referred to as an "earpiece", is configured to convert an audio electrical signal into a sound signal. When a call is answered or speech information is received through the electronic device 100, the receiver 162 may be put close to a human ear to listen to a voice.

The microphone 163, also referred to as a "mike" or a "mic", is configured to convert a sound signal into an electrical signal. When making a call or sending voice information, the user may place the mouth of the user near the microphone 163 to make a sound, to input a sound signal to the microphone 163. At least one microphone 163 may be disposed in the electronic device 100. In some other embodiments, two microphones 163 may be disposed in the electronic device 100, to collect a sound signal and implement a noise reduction function. In some other embodiments, three, four, or more microphones 163 may alternatively be disposed in the electronic device 100, to collect a sound signal, reduce noise, further recognize a sound source, implement a directional recording function, and the like.

The headset jack 164 is configured to connect to a wired headset. The headset jack 164 may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 151. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 151, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation strength may correspond to different operation instructions.

The touch sensor 180D is also referred to as a "touch panel". The touch sensor 180D is configured to detect a touch operation performed on or near the touch sensor. The touch sensor may transfer the detected touch operation to the application processor to determine a type of a touch event. Visual output related to the touch operation may be provided by using the display 151.

It should be understood that the electronic device 100 shown in FIG. 12 is merely an example, and the electronic device 100 may have more or fewer components than those shown in FIG. 12, or may have two or more components that are combined, or may have different component configurations. Various components shown in FIG. 12 may be implemented in hardware including one or more signal processing circuits and/or application-specific integrated circuits, software, or a combination of hardware and software.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. An interaction method, applied to an electronic device, wherein the electronic device comprises a screen, and the method comprises:
detecting, by the electronic device, a first operation;
in response to the first operation, starting, by the electronic device, an intelligent interaction function and displaying an intelligent interaction entry, wherein the intelligent interaction function is used for interaction between the electronic device and a user by using a voice instruction or a text instruction, the intelligent interaction entry is displayed at a first location or near the first location, and the first location is a location of a cursor on the screen when the first operation is detected;
detecting, by the electronic device, that the user inputs a first instruction by using the intelligent interaction entry, and determining, based on the first instruction, that an interaction object is a first interaction object; and
performing, by the electronic device, an operation corresponding to the first instruction on the first interaction object.

2. The method according to claim 1, wherein the electronic device is connected to an accessory device, and the accessory device is configured to receive the first operation and an operation of moving the cursor by the user.

3. The method according to claim 2, wherein the accessory device is a mouse, the mouse comprises a left button and a right button, and the first operation is an operation of pressing and holding the left button, or an operation of pressing and holding the right button, or an operation of pressing and holding both the left button and the right button.

4. The method according to any one of claims 1 to 3, wherein determining, by the electronic device based on the first instruction, that the interaction object is the first interaction object specifically comprises:
when the first instruction does not comprise a first keyword, determining, by the electronic device, that the first interaction object is an object that is recognizable at the first location, wherein the first keyword is a keyword indicating the interaction object; or
when the first instruction comprises the first keyword, determining, as the first interaction object by the electronic device, the interaction object indicated by the first keyword.

5. The method according to any one of claims 1 to 4, wherein the intelligent interaction entry is formed by deforming the cursor.

6. The method according to any one of claims 1 to 5, wherein after starting, by the electronic device, the intelligent interaction function, the method further comprises:
outputting, by the electronic device, a first prompt, wherein the first prompt prompts the user to input a recognizable instruction corresponding to the first interaction object.

7. The method according to any one of claims 1 to 6, wherein after detecting, by the electronic device, that the user inputs the first instruction, the method further comprises:
if the electronic device detects that the user cancels the first operation, skipping detecting, by the electronic device, an instruction input by the user.

8. The method according to any one of claims 1 to 7, wherein the first instruction does not comprise a keyword that directly indicates a name of the interaction object.

9. The method according to any one of claims 1 to 8, wherein the cursor is a pointer cursor, the first interaction object is a picture or first content in the picture, the first content is a part of content in the picture, and performing, by the electronic device, the operation corresponding to the first instruction on the first interaction object specifically comprises:
when the first instruction indicates an intention of performing a second operation on the first interaction object, performing, by the electronic device, the second operation on the first interaction object, wherein the second operation comprises any one of the following operations: sharing, collecting, copying, erasing, replacing, inserting, beautifying, recognizing, style migration, parameter adjustment, and saving.

10. The method according to claim 9, wherein when the second operation is the saving operation, performing, by the electronic device, the second operation on the first interaction object specifically comprises:
saving, by the electronic device, the first interaction object to a target location, wherein the target location is a default storage location, or the target location is determined based on a keyword that is comprised in the first instruction and that indicates a storage location.

11. The method according to any one of claims 1 to 8, wherein the cursor is a pointer cursor, the first interaction object is a video, and performing, by the electronic device, the operation corresponding to the first instruction on the first interaction object specifically comprises:
when the first instruction indicates an intention of performing a third operation on the video, performing, by the electronic device, the third operation on the video, wherein the third operation comprises any one of the following operations: sharing, collecting, playing, trimming, and saving.

12. The method according to any one of claims 1 to 8, wherein the cursor is a pointer cursor, the first interaction object is a first text, and performing, by the electronic device, the operation corresponding to the first instruction on the first interaction object specifically comprises:
when the first instruction indicates an intention of summarizing the first text, summarizing, by the electronic device, the first text to generate a second text, and displaying a first window, wherein the first window comprises the second text;
or
when the first instruction indicates an intention of translating the first text, translating, by the electronic device, the first text to generate a third text, and displaying a second window, wherein the second window comprises the third text; or
when the first instruction indicates an intention of querying the first text, querying, by the electronic device, the first text, and displaying a query result, wherein the query result comprises related information of the first text.

13. The method according to claim 12, wherein the method further comprises:
detecting, by the electronic device, a fourth operation; and in response to the fourth operation, replacing, by the electronic device, the first text with the second text, and displaying the second text; or
detecting, by the electronic device, a fifth operation; and in response to the fifth operation, replacing, by the electronic device, the first text with the third text, and displaying the third text.

14. The method according to any one of claims 1 to 8, wherein the cursor is a pointer cursor, and performing, by the electronic device, the operation corresponding to the first instruction on the first interaction object specifically comprises:
when the first instruction indicates an intention of searching for a first object, searching, by the electronic device, for the first object, and displaying a search result, wherein the search result comprises information about one or more first objects, and a type of the first object comprises any one of the following: a picture, a video, and a document.

15. The method according to claim 14, wherein before searching, by the electronic device, for the first object, the method further comprises:
displaying, by the electronic device, a first user interface, wherein the first user interface is a user interface corresponding to a first document;
displaying, by the electronic device, the search result specifically comprises:
displaying, by the electronic device, the search result in the first user interface; and
after displaying, by the electronic device, the search result, the method further comprises:
detecting, by the electronic device, a sixth operation; and
inserting, by the electronic device, the first object into the first document in response to the sixth operation.

16. The method according to claim 14, wherein the first object is a second document, and before searching, by the electronic device, for the first object, the method further comprises:
displaying, by the electronic device, a desktop;
displaying, by the electronic device, the search result specifically comprises:
displaying, by the electronic device, the search result on the desktop; and
after displaying, by the electronic device, the search result, the method further comprises:
detecting, by the electronic device, a seventh operation; and
opening, by the electronic device, the second document in response to the seventh operation.

17. The method according to any one of claims 1 to 8, wherein the cursor is a text cursor, the method further comprises:
detecting, by the electronic device, first input of the user; and
in response to the first input, inputting and displaying, by the electronic device, a fourth text, wherein the fourth text is generated based on the first input.

18. The method according to any one of claims 1 to 17, wherein the intelligent interaction entry is used to display a first menu option, the first menu option is generated based on the first interaction object, and the method further comprises:
detecting, by the electronic device, an eighth operation performed by the user on the first menu option; and
performing, by the electronic device, an operation corresponding to the first menu option on the first interaction object in response to the eighth operation.

19. The method according to claim 18, wherein the first interaction object comprises information related to a date, the first menu option is used to add the information related to the date to a schedule reminder application, and performing, by the electronic device, the operation corresponding to the first menu option on the first interaction object specifically comprises:
adding, by the electronic device, the information related to the date to the schedule reminder application.

20. The method according to claim 18, wherein the first interaction object comprises a two-dimensional code, the first menu option is used to recognize the two-dimensional code, and performing, by the electronic device, the operation corresponding to the first menu option on the first interaction object specifically comprises:
recognizing, by the electronic device, the two-dimensional code.

21. The method according to any one of claims 1 to 20, wherein performing, by the electronic device, the corresponding operation on the first interaction object is implemented by the electronic device by invoking a function provided by an application in which the first interaction object is located.

22. An electronic device, wherein the electronic device comprises one or more processors and one or more memories, wherein the one or more memories are coupled to the one or more processors, the one or more memories are configured to store computer program code, the computer program code comprises computer instructions, and when the one or more processors execute the computer instructions, the electronic device is caused to perform the method according to any one of claims 1 to 21.

23. A computer storage medium, wherein the computer storage medium stores a computer program, the computer program comprises program instructions, and when the program instructions are run on an electronic device, the electronic device is caused to perform the method according to any one of claims 1 to 21.
